# EUROPEAN PATENT APPLICATION

(11) **EP 4 686 994 A1**
(43) Date of publication of application: **04.02.2026**
(21) Application number: 25192300.9
(22) Date of filing: 28.07.2025
(51) Int. Cl.: G05B 19/418, G05B 13/00, G06F 9/50

(54) **TASK-DRIVEN PROCESS CONTROL AND AUTONOMOUS PROCESS RESOURCE CONFIGURATION**

(30) Priority: 29.07.2024 US 202418787178
(71) Applicant: ASCon Systems Holding GmbH, 70563 Stuttgart (DE)
(72) Inventor: Grefen, Kilian, 71701 Schwieberdingen (DE)
(74) Representative: Plasseraud IP

(57) **Abstract**

The present invention relates to a resource object (26) operated in a modular processing system (10) for execution of at least one task (28) in support of modular processing system operation. Every task (28) is defined by a requested capability specification representing an expected functionality for task execution and/or by a requested resource specification representing at least one processing resource expected for task execution. As tasks describe capabilities and/or resources to be provided for related task execution the resource object (26) can execute autonomous process resource configuration. The present invention also relates to a processing resource pool providing processing resources for use through the resource object (26) during autonomous process resource configuration.

## Description

### FIELD OF INVENTION

The present invention relates to a resource object operated in a modular processing system for execution of at least one task in support of the modular processing system operation, to a processing resource pool operated in relation to the resource object for providing access to at least one processing resource which may be used by the resource object for task execution, and to methods of operating the resource object and the processing resource pool.

### TECHNICAL BACKGROUND

Digital and automized production processes form the basis for running production infrastructure and industrial automation. Lately, software defined manufacturing SDM provides increased flexibility in manufacturing and independence from a manufacturing context and change of processing conditions over time.

While traditional approaches to industrial automation focus on hardware like machines and control infrastructure software defined manufacturing SDM controls hardware and control infrastructure through software systems and/or software platforms.

This allows for optimization of process resources in integrated manner in real time. Software defined manufacturing SDM supports adaptation to new production requirements and designs as well as changes within productions processes. Key technologies for the realization of software defined manufacturing SDM are cloud computing, artificial intelligence and the Internet of Things loT.

Further, a convergence on information technology and of operational technology plays a central role for software defined manufacturing SDM. This convergence leads to a seamless integration of administration and production related data. Potential problems in production may be anticipated and resolved before they actually arise. As a result predictive maintenance strategies allow for a reduction of production down time and for cost savings.

However, while software defined manufacturing SDM achieves benefits as outlined above it is still processing resource oriented. The focus is on existing production hardware, control infrastructure, and integration of different information and data flows. This implies an early decision on how existing processing resources are used within a software defined manufacturing process.

Overall, there is a restriction in coping with changing process conditions which prevail in real time change in availability of processing resources, in processing context, and/or even handling of failure constellations.

### SUMMARY OF INVENTION

In view of the above, the technical object of the present invention is to provide a software defined manufacturing solution that can handle a production process which is specified via tasks describing capabilities to be provided for related task execution in support of autonomous process resource configuration.

According to a first aspect of the present invention there is provided a resource object operated in a modular processing system for execution of at least one task in support of modular processing system operation. Every task is defined by a requested capability specification representing an expected functionality for task execution and/or by a requested resource specification representing at least one processing resource expected for task execution. Also, the resource object continuously references a resource object signature representing over time an operative status prevailing in the modular processing system outside the resource object and/or locally at the resource object.

According to the first aspect of the present invention the resource object comprises a task pre-processor adapted to release a task execution with respect to a task under consideration when at least one selected processing resource usable by the resource object has a capability specification matching with the requested capability specification of the task and/or a resource specification matching with the requested resource specification of the task and when at least one operative status that is represented by the resource object signature and must prevail as a condition for release of task execution matches with a requested operative status of the specified for the resource object.

According to the first aspect of the present invention the resource object also comprises a task execution controller adapted to control task execution by the selected at least one processing resource in observation of the resource object signature.

According to a second aspect of the present invention there is provided a processing resource pool operated in relation to a resource object for providing access to at least one processing resource which may be used by the resource object for task execution during operation of a modular processing system.

According to the second aspect of the present invention the processing capacity pool comprises a processing resource registry adapted to register at least one processing resource according to at least one registration criterium characterizing the at least one processing resource and a resource pool manager including a resource allocation controller.

According to the second aspect of the present invention the resource allocation controller is adapted to search the processing resource repository upon receipt of a search request specifying at least one search criterium to check whether at least one registration criteria of at least one registered processing resource matches with the at least one search criterium for generation of a search result.

According to the second aspect of the present invention the resource allocation controller is also adapted to update the search result through application of an search optimization function when the search result lists a plurality of registered processing resources. Here, the search optimization function evaluates at least one search relevant feature of registered processing resources listed in the search result for identification of at least one preferred registered processing resource from the search result and for related update of the search result.

According to the second aspect of the present invention the resource allocation controller is also adapted to allocate every registered processing resource listed in the search result to an allocation resource object for subsequent use through the allocation resource object.

According to a third aspect of the present invention there is provided a method of operating a resource object in a modular processing system for execution of at least one task in support of modular processing system operation. Here, every task is defined by a requested capability specification representing an expected functionality for task execution and/or by a requested resource specification representing at least one processing resource expected for task execution. Further, a resource object signature represents over time an operative status prevailing in the modular processing system outside the resource object and/or locally at the resource object.

According to the third aspect of the present invention the method comprises a step of checking whether at least one selected processing resource usable by the resource object has a capability specification matching with the requested capability specification of the task and/or a resource specification matching with the requested resource specification of the task.

Further, according to the third aspect of the present invention the method comprises a step of checking whether at least one operative status that is represented by the resource object signature matches with a requested operative status that must prevail as a condition for release of task execution through the resource object.

Further, according to the third aspect of the present invention the method comprises a step of releasing a task execution with respect to a task under consideration upon availability of at least one selected processing resource with matching capability specification and/or resource specification and upon a match with the requested operative status.

Further, according to the third aspect of the present invention the method comprises a step of controlling task execution by the selected at least one processing resource in observation of the resource object signature.

According to a fourth aspect of the present invention there is provided a method of operating a processing resource pool which is operated in relation to a resource object for providing access to at least one processing resource which may be used by the resource object for task execution during operation of a modular processing system.

According to the fourth aspect of the present invention the method comprises a step of registering at least one processing resource according to at least one registration criteria characterizing the at least one processing resource.

According to the fourth aspect of the present invention the method comprises a step of searching the processing resource registry upon receipt of a search request specifying at least one search criteria to check whether at least one registration criteria of at least one registered processing resource registered in the processing resource registry matches with the at least one search criteria for generation of a search result.

According to the fourth aspect of the present invention the method comprises a step of optimizing the search result through application of a search optimization function when the search result lists a plurality of registered processing resources, wherein the search optimization function evaluates at least one search relevant feature of registered processing resources listed in the search result for identification of at least one preferred registered processing resource from the search result and for related update of the search result.

According to the fourth aspect of the present invention the method comprises a step of allocating every registered processing resource listed in the search result to an allocation resource object for subsequent use through the allocation resource object.

### BRIEF DESCRIPTION OF DRAWING

In the following various aspects of the present invention and related implementations will be explained with reference to the drawing in which:
- Fig. 1: shows an overview on different modular processing systems using a resource object part running at least one resource object according to the present invention for resolution of tasks during operation of the modular processing system;
- Fig. 2: shows basic concepts underlying the operation of resource objects according to the present invention and a related basic schematic diagram for a resource object;
- Fig. 3: shows a task specification and related handling thereof through a resource object according to the present invention;
- Fig. 4: shows an observation-based feedback mechanism achieving parallelization of operation with respect to a plurality of resource objects according to the present invention;
- Fig. 5: shows a configuration process for an observation instance using an observer capability template and an observer capability set template according to the present invention;
- Fig. 6: shows a further detailed schematic diagram of the observer shown in Fig. 2;
- Fig. 7: shows a flowchart of operation for the observer shown in Fig. 6;
- Fig. 8: shows a basic structure of a resource object signature which is used for control of a resource object operation according to the present invention;
- Fig. 9: shows a further detailed structure of the resource object signature shown in Fig. 8;
- Fig. 10: shows a further detailed schematic diagram of the task processor and the processing resources shown in Fig. 2;
- Fig. 11: shows a flowchart of operation for the resource object base part shown in Fig. 10;
- Fig. 12: shows a further detailed flowchart of operation in relation to a checking global release condition, a local release condition, and processing resources prior to task execution release;
- Fig. 13: shows a further detailed schematic diagram of the resource object according to the present in invention shown in Fig. 2 and Fig. 10;
- Fig. 14: shows an interoperation of the functional units shown in Fig. 13 according to a scenario (a) task execution through use of a local capability/function, (b) task execution through execution of a process sequence, and (c) task execution by task delegation, respectively;
- Fig. 15: shows a flowchart of operation for the task pre-processor with respect to instructing task execution through a local capability/function, a process sequence providing a requested capability upon execution thereof, or through delegation of task execution to a further resource object;
- Fig. 16: shows a further detailed schematic diagram for a local capability/function manager shown in Fig. 10;
- Fig. 17: shows an example of functional assignments as means for differentiation between local capabilities/functions having identical construction but being used to achieve different functional effects;
- Fig. 18: shows a flowchart of operation for the task execution controller shown in Fig. 9 with respect to task execution by a local capability/function;
- Fig. 19: shows a process sequence wherein each step of the process sequence has assigned thereto a step start condition, a step stop condition, and at least one task definition for a task to be executed as part of a step execution;
- Fig. 20: shows a further detailed schematic diagram for a sequence manager shown in Fig. 10;
- Fig. 21: shows a flowchart of operation for the sequence manager shown in Fig. 20;
- Fig. 22: shows the relevance of a task specification and of different resource object signature sections for the acceptance of a task, the start of a process sequence execution, and the start of a process sequence step execution;
- Fig. 23: shows a further detailed schematic diagram of the sequence execution controller shown in Fig. 13;
- Fig. 24: shows a flowchart of operation for the sequence setup controller shown in Fig. 23;
- Fig. 25: shows a flowchart of operation for the sequence controller shown in Fig. 23;
- Fig. 26: shows a flowchart of operation for the step controller shown in Fig. 23;
- Fig. 27: shows a further detailed flowchart of operation for checking of step execution conditions by the step controller shown in Fig. 23;
- Fig. 28: shows flowchart of operation with respect to a checking of local processing resource conditions according to step S120 shown in Fig. 27;
- Fig. 29: shows a flowchart of operation with respect to a task execution according to step S116 shown in Fig. 26;
- Fig. 30: shows a flowchart of operation with respect to examination of step finish conditions according to step S118 shown in Fig. 26;
- Fig. 31: shows a further detailed diagram of the pose manager shown in Fig. 13;
- Fig. 32: shows a flowchart of operation for the pose manager shown in Fig. 31;
- Fig. 33: shows an example of how a resource object signature drives process sequence execution, e.g., for deciding on acceptance of sequence execution, on the start of sequence execution, and on the processing of process sequence steps and related step tasks;
- Fig. 34: shows an interoperation of the resource object shown in Fig. 13 with a processing resource pool providing a pooled process sequence and/or a pooled processing resource object as task delegation target upon submission of a related search request thereto;
- Fig. 35: shows a schematic diagram of the processing resource pool shown in Fig. 34;
- Fig. 36: shows a flowchart of operation for the resource processing pool shown in Fig. 35;
- Fig. 37: shows a flowchart of operation for the task delegation controller shown in Fig. 13; and
- Fig. 38: shows options for interoperation between resource objects and related resource objects pools.

### DETAILED DESCRIPTION OF INVENTION

In the following the present invention will be explained in detail with reference to the drawing. It should be understood that such explanation is related to examples of the present invention only and not binding to the scope of the present invention as defined by the claims. As far as reference is made to specific functional units this is to be considered as example for the functionality such the functional units are clearly exchangeable as long as the same functionality is achieved, e.g., through implementation in software, hardware or any combination thereof.

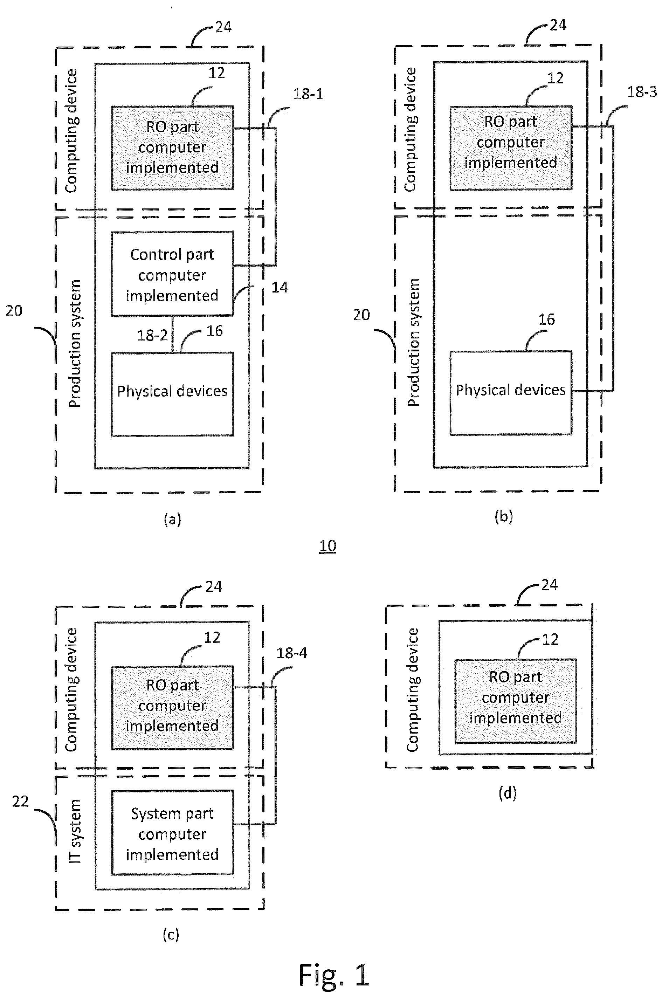

Fig. 1 shows an overview on different modular processing systems using a resource object part running at least one resource object according to the present invention for resolution of tasks during operation of the modular processing system.

As shown in Fig. 1, according to the present invention a modular processing system 10 may be understood as a set of interrelated operational units that are either considered as a whole or in a particular context and which are distinct from their environment. Further, modular processing systems 10 may be configured by using computer implemented system parts 12, 14 and/or physical devices integrated into a physical system part 16.

As shown in Fig.1, computer implemented system parts 12, 14 of the modular processing system 10 communicate with the physical system part 16 or other computer implemented system parts via communication channels 18.

E.g., examples for computer implemented system parts 12, 14 may be traditional PLC control logic or a field bus driver. Examples for physical devices in the physical system part 16 may be A/D converters, mechanical devices like conveyor belts, or electrical devices like sensors and/or actuators. Typically, these components are used to configure of a production system 20.

Yet another example for a computer implemented system part may be an IT system 22 which may be operated as a production module for service optimization or as a connector module.

As shown in Fig. 1, a modular processing system 10 according to the present invention comprises a resource object part 12 running on a computing device 24. The resource object part 12 comprises and runs at least one resource object 26 which accepts execution of a task which may be derived from a process plan which is specified for a operation of the modular processing system. Here, the task is submitted to the resource object 26 for processing thereof subject to pre-determined operative conditions.

As shown in Fig 1, the first example (a) for a configuration of the modular processing system 10 may be a traditional shop floor system 20 extended by the computing device 24 running the resource object part 12. Here, a first communication 18-1 channel is setup between the resource object part 12 and the computer implemented control part 14 of the production system 20. Also, second communication channel 18-2 is established computer implemented control part 14 and the physical system part 16. According to this configuration (a) resource objects of the resource object part 12 may supervise and extend control of the system control part 14 during operation of the production system 20.

As shown in Fig. 1, a second example (b) for a configuration of the modular processing system 10 may be a combination of the resource object part 12 with the physical system part 16. Here, a communication channel 18-3 is provided between the resource object part 12 and the physical system part 16 in direct manner. According to this configuration the resource objects run by the resource object part 12 may directly control the physical system part 16 of the production system 20 without involvement of a traditional PLC control.

As shown in Fig. 1, a third example (c) for a configuration of the modular processing system 10 may be a combination of the resource object part 12 with an IT system 22. Such a scenario applies, e.g., for a configuration of a production module optimizing production services of for configuration of MES/ERP connectors.

As shown in Fig 1, a fourth example (d) for a configuration of the modular processing system 10 is a standalone operation of the resource object part 12, e.g., for a configuration of a diagnostics communication management system DCM.

It should be noted that according to the present invention there are no particular restrictions imposed on how the resource object part 12 is actually realized as long as its related functionality to be described in the following is provided. Typical examples would be dedicated software, a SaaS system in a cloud-based environment, e.g., using digital twin objects that provide a logical behavior as specified on a behavioral level.

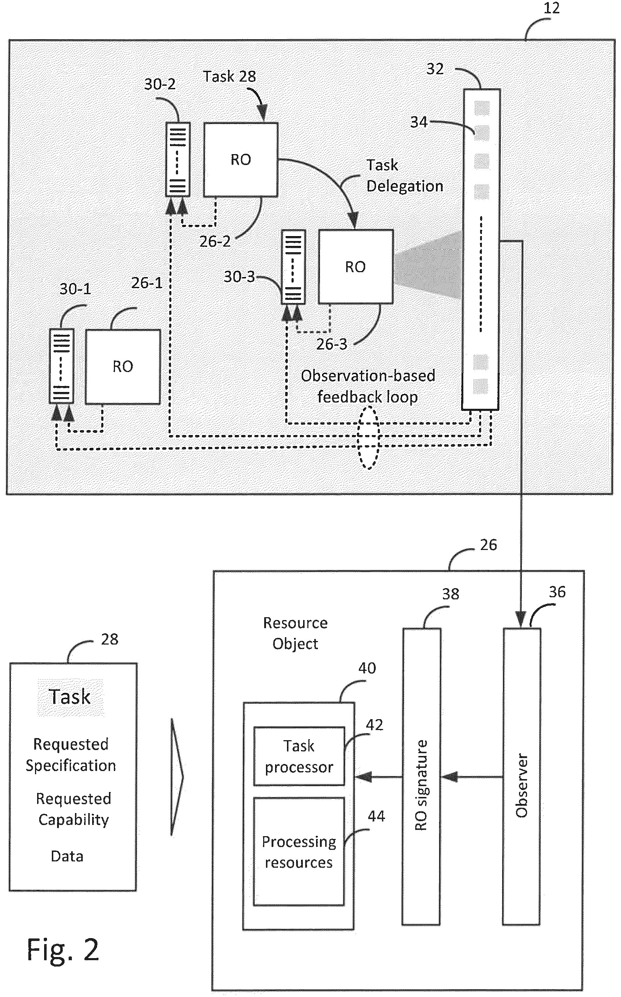

Fig. 2 shows basic concepts underlying the operation of resource objects according to the present invention and a related basic schematic diagram for a resource object.

As shown in Fig. 2, in the resource object part 12 of the modular processing system 10 there may be operated a plurality of resource objects 26 which respectively accept execution of a task submitted to the resource object 26 subject to pre-determined conditions.

Here, it should be noted that according to the present invention there are not imposed any restrictions on the type of the modular processing system 10. Typical examples would be a manufacturing system, a logistics system, or any other type of processing system prepared to operate under a pre-determined process plan.

Also, with this respect to the type of resource object 26 according to the present invention there exist no particular restrictions with respect to a realization and use thereof. A resource object 26 may be operated in relation to different levels of processing in the modular processing system 10, e.g., in relation to a physical device operated on a shopfloor of a manufacturing site, in relation to a control logic, or in relation to a digital function provided in a digital domain, e.g., a digital twin operated in a cloud system for monitoring and control of field devices.

Further, a task 28 may be derived from a process plan set up for the modular processing system 10 and specifies a partial process to be executed by a resource object 26. Upon setup of the process plan there is no binding to a specific processing resource which significantly increases flexibility for running of the modular processing system 10 as task -driven execution of a process plan only specifies what has to be done, irrespective how.

As shown in Fig. 2, every resource object 28 is adapted to track a related signature 30 which drives operation of the resource object 26. To put it differently, the information carried by the signature 30 controls operation of the resource object 26 upon execution of a task 28 submitted thereto.

As shown in Fig. 2, the information carried by the signature 30 may either be specified externally, reflect an internal status of the resource object 26 or be generated through observation an operative status of the modular processing system 10.

As shown in Fig. 2, for the observation an operative status of the modular processing system 10 one may assume without loss of generality that the overall status of the modular processing system 10 may be represented as an observation space 32 which is set up from a plurality of observation sizes 34 that are observable in the modular processing system 10.

As shown in Fig. 2, the operation of any resource object 26 may have an impact on at least a subset of observation sizes 34 of the observation space 32. When such changes are observed and fed back to the different signatures 30 of the resource objects 26 operated in the modular processing system 10 the operation of different resource objects 26 may be executed independently.

As shown in Fig. 2, any resource object 26 has always access to observation information relevant for its operation via its resource object signature 30 without having to monitor other resource objects 26 in the modular processing system. Thus, the establishment of the observation mechanism according to the present invention allows for a parallelized operation of different resource objects 26.

As shown in Fig. 2, a resource object 26, e.g., resource object 26-2, may delegate the execution of a task to another resource object, e.g., to resource object 26-3. Here, once a task is delegated, the delegating resource object will no longer track and monitor the outcome of the task processing in a sequential and supervising manner. To the contrary, it proceeds with its related own operation without direct and sequential monitoring of the result of the execution of the delegated. This decoupling is achieved through the observation mechanism according to the present invention and through the feedback of observation size related information via signatures 30.

In conclusion, the observation mechanism according to the present mention supports a parallelization of operation between different resource objects and increases flexibility and speed of processing within the modular processing system.

As shown in Fig. 2, generally a task 28 is set up from a requested specification of a resource object required for execution of the task, a requested capability of a resource object 26 executing the task, and of data in relation to a task, e.g., a set of parameters driving a task execution.

Thus, according to the present invention the specification of a task 28 does not require a dedicated assignment of task execution to a specific processing resource and thus increases flexibility for processing of within the model of processing system 10. The reason for this is that tasks 28 are specified on a level of capabilities irrespective of how such capabilities are finally realized and implemented.

Further, while a task 28 may specify a requested resource specification also here only the type of processing resource is given without specification of a processing resource instance. Related information may be resource category, resource sub-category, version, optionally an applicable technical domain. A resource specification allows to classify a processing resource to an extend necessary for selection of an executing processing resource which may execute the task 28.

As shown in Fig. 2, generally a resource object 26 at least comprises an observer 36, a signature memory 38, and a processing base part 40. The processing base part 40 is set up from a task processor 42 operating on processing resources 44 usable by the resource object 26.

Operatively, the observer 36 is adapted to continuously observe observation sizes 34 which are relevant for operation of the resource object during task execution and to feed observation results into the resource object memory 38 for an update of the resource object signature 30. Also, the observer 36 may adapted to continuously observe an inter status of the resource object for a related update of the resource object signature 30.

Further, the task processor 42 is adapted to decide on acceptance of a task 28 submitted to the resource object 26 for execution thereof. Heretofore, the task processor 42 is adapted to evaluate processing resources 44 usable by the resource object 26 to decide on a match between requested capability and requested resource specification defined for a task and the usable processing resources 44. Further, the task processor 42 is adapted to check on overall operative status of the resource object 26 prior to acceptance of task execution.

In conclusion, with respect to Fig. 2 there have been explained important concepts underlying the present invention as follows:
A first such concept is the operation of resource objects 26 on the basis of tasks submitted thereto. Here, tasks specify a requested capability and a requested resource that must be provided by a resource object 26 without defining how this is achieved. Thus, a process specification is given on a higher abstraction level in comparison to existing approaches to process specification which increases flexibility.

A second such concept is the establishment of an observation-based feedback loop. The observation-based feedback loop allows to parallelize operation between different resource objects 26 and avoids communication intense sequential monitoring between different resource objects 26.

A third such concept is the control of task execution via signatures 30. Signatures 30 allow to filter observation sizes 34 which are relevant for the operation of resource objects 26 and to define operative conditions for task execution through resource objects 26. Thus, signatures 30 drive the operation control of processing resources 26 and reduce related information processing load as only relevant information is supplied to resource objects 26 via related signatures 30.

Overall, the present invention relies on execution of a cascade of task-related processes, observation and adaption to a continuous change in operative conditions, and parallelization of execution of task-related processes through establishment of a observation-based feedback loop mechanism.

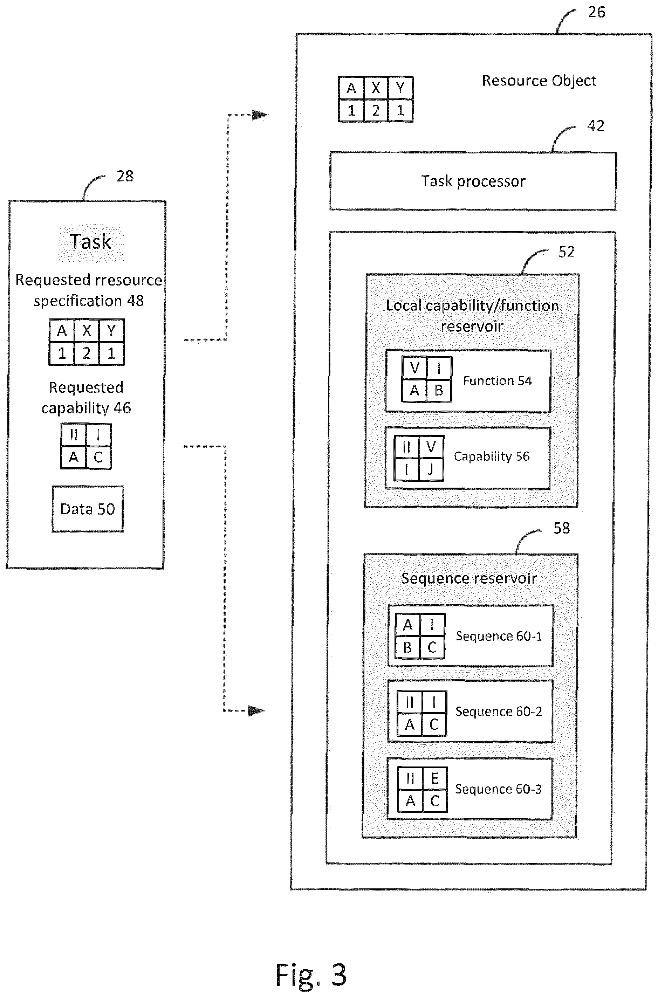

Fig. 3 shows a task specification and related handling thereof through a resource object to the present invention.

Generally, according to the present invention a task 28 should carry only minimal information on what is to be achieved and not about how something should be achieved.

As outlined above, a specification of a task 28 comprises a specification of a requested capability 46 describing a functionality expected for an execution of the task, a requested resource specification 48 describing a type of resource expected for execution of the data the task, and optionally data 50 that drives the task execution process, e.g., a set of parameters with respect to degrees of freedom prevailing for task execution.

As shown in Fig. 3, while the requested resource and request capability are specified as a six tuple and a quadruple of symbols it should be understood that there is no restriction on the representation of such information. The essence for handling such information is to find a fit between the specification and related information provided by the resource object. Once such a fit between a requested resource specification 48 and a requested capability 48 is established between the task 28 and processing resources available and usable by the resource object 26 a task 28 will be accepted by the resource object 26 subject to conditions which are reflected by the signature 30 of the resource object 26.

As shown in Fig. 3, the task processor 42 of the resource object 26 may use at least one local resource available from a local capability/function reservoir 52 which is provided as a function 54 or provided as a capability 56.

As shown in Fig. 3, local resources may be classified as function 54 or as capability 56. Here, a function 54 is fixedly installed into the resource object 26 and continuously available for use thereof. Alternatively, a local resource may be classified as capability 56 which is available only in certain time periods and not continuously as the function 54. E.g., a capability may be an AGV robot which is temporarily located adjacent a conveyor line during a certain period of time while moving away from the conveyor line otherwise.

From the above, due to the differentiation between a function 54 and a capability 56 as a local resource of the resource object 26 it can happen that a task 28 is accepted for task execution at a certain point in time while the same task 28 may be rejected and at another point in time when task-related capabilities are no longer usable by the resource object 26. This shows that the specification of the task 28 independent of assignment of related execution to specific resources in the modular processing system 10 supports the handling of dynamic constellations within the modular processing system 10 and thus increases overall operative flexibility.

As shown in Fig. 3, through access to a sequence reservoir 58 the task processor 42 of the resource object 26 may optionally use at least one local resource provided as at least one process sequence 60-1, 60-2, 60-3, ... or sequence in short.

Generally, process sequences 60 are short sequences and orchestrate local resources and related activities, i.e. describe an interoperation of a plurality of capabilities/functions to provide a certain capability.

Further, when a process sequence 60 is no longer executable due to a change of operative conditions as reflected by a signature 30 it may happen that corresponding requested capability allows for re-entry and activation of another process sequence which may become executable due to the same change of operative conditions.

In conclusion, the handling of a task 28 within the resource object 26 relates to the assignment of available processing resources to specified requested resource and/or a requested capability in real time which implies autonomous resource object configuration in response to submission of a task 28 thereto.

Here, one should understand that such an assignment may be achieved in a static manner such that for a certain specified capability only one local processing resource is usable and thus may be assigned statically. Here, static assignment occurs as soon as possible during configuration of a process for the modular processing system 10.

Otherwise, should a certain processing resources be available only during certain periods of time a related assignment is a dynamic assignment. According to the present invention dynamic assignments should be executed as late as possible prior to start of task execution to maximize processing resource availability.

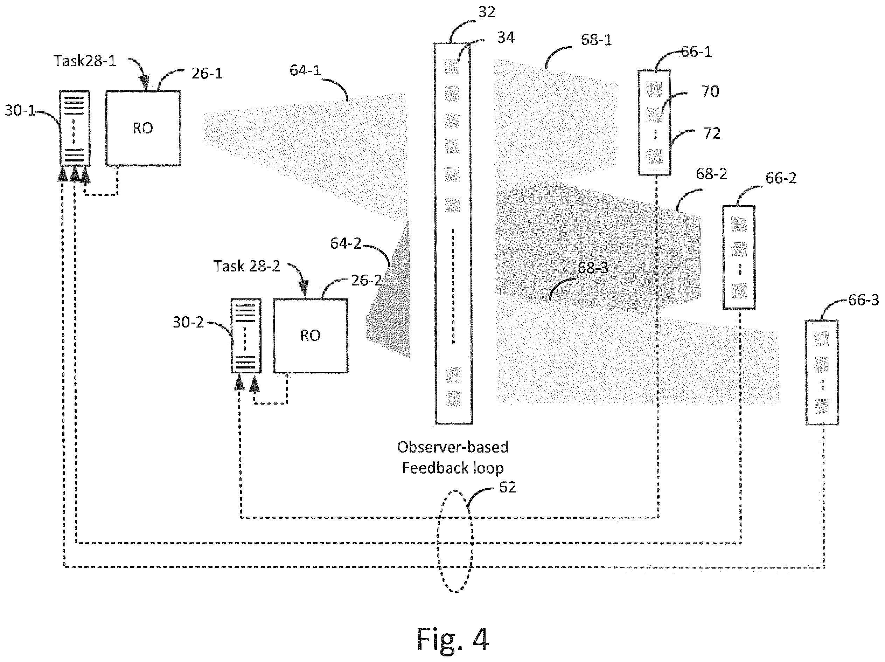

Fig. 4 shows an observation-based feedback mechanism achieving parallelization of operation with respect to a plurality of resource objects 26 according to the present invention.

As shown in Fig. 4 and outlined above with respect to Fig. 2, according to the present invention there is established an observation-based feedback loop 62 for feedback of observation data in relation to observation sizes 34 from an observation space 32 into signatures 30 of resource objects 26.

As shown in Fig. 4, generally an operation of a resource object 26 may have an impact on a subset of observation sizes 34 of the observation space 32. In other words, the operation of a resource object 26 modifies observation sizes 34 and the set of modified observation sizes constitutes an observation size reach 64 of the resource object 26.

As shown in Fig. 4, within the framework of observation-based feedback loop 62 there are operated a plurality of observers 66 each operating on a subset of observation sizes 34 for observation thereof. Every subset of observation sizes constitutes an observation size feed 68 to the related observer 66.

According to the present invention an observation size 34 may, e.g., represent a physical size, a local status within the modular processing system 10, an external input to the model processing system 10, sensor data, actuator data, or any other size which may be relevant and should be observed during operation of the modular processing system 10. It should be understood that the observation size 34 may exist also in a digital domain outside the modular processing system 10, i.e., in a cloud-based control system operated outside the modular processing system 10 for control thereof.

As shown in Fig. 4, for the observation of observation sizes 34 it may be necessary to convert an observation format into a format suitable for further processing thereof within the observation-based feedback loop 62. Such conversions are specified as observer capabilities 70. Here, different observation sizes 34 may need different observer capabilities 70. To cover different observers sizes 34 in an observer size feed 68 of an observer 66 a plurality of observer capabilities 70 may be combined into an observer capabilities set 72 for subsequent configuration of the related observer 66.

It should be understood that according to the present invention every observer 66 is operated in relation to a signature 30 of a resource object 26 and is generally integrated into the resource object 26. Also, a resource object 26 may use a plurality of observers 66 in relation to different observation size feeds 68 being relevant for the execution of one or more tasks through the resource object 26. Thus, as every resource object 26 observes all observation sizes 34 being relevant for its operation and a mutual exchange of related information between resource objects 26 becomes obsolete so that different resource objects 26 can operate in parallel.

As shown in Fig. 4, observer sizes 34 if an observer feed 68 may also be related to internal observer sizes prevailing internally with respect to a resource object 62. I.e., with respect to observers 66 there is no differentiation between observer sizes 34 which are observable internally within a resource object 26 and observer sizes 34 which are observable outside of a resource object 26.

Still further, it should be noted that according to the present invention observation and task execution are decoupled through the introduction of signatures 30. Observation processes are executed continuously irrespective of whether a task 28 is to be executed or not and once a resource object 26 accepts a task 28 it may check with its signature 30 to evaluate execution conditions. Also, as observers 66 continuously feed signatures 30 in real time, then task execution may start as soon as possible once all related conditions are met. Here, an observer 66 may feed a plurality of signatures 30 and one signature 30 may accommodate feedback information from a plurality of observers 66.

Still further, as observation and task execution are decoupled there is no sequential checking of task execution status by a resource object 26 delegating a task execution to another resource object 26 and therefore no blocking of operation of resource objects 26 by the processing of sequential inquiries. This forms the basis for a parallel operation of resource objects 26 in the modular processing system 10.

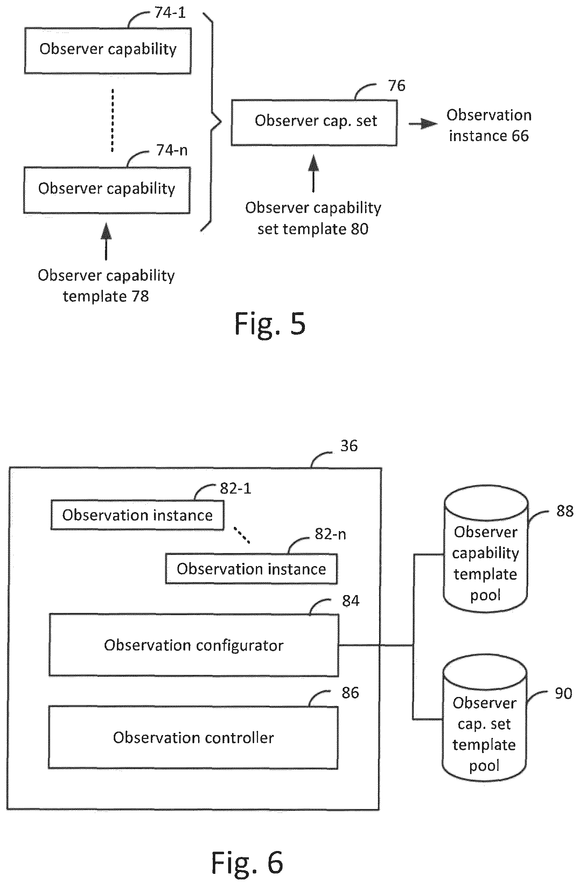

Fig. 5 shows a configuration process for an observation instance using an observer capability template 78 and an observer capability set template 80 according to the present invention.

As shown in Fig. 5, the configuration of an observation instance relies on observer capabilities 74 and observer capability sets 76. For every observer capability there may be provided a related template 78 which may be available from an observer capability template pool 88. Also, for each observer capability set 76 there may be provided a related observer capability set template 80 which may be available from an observer capability set template pool 90.

It should be noted that certain operative constellations require the configuration of a mandatory observer set. Typical examples are observation of a global release condition GLS for a resource object 26 prior to start of task execution through a processing resource as such global release condition GLS is specified from outside and needs continuous supervision. Other examples are, e.g., observation of an assigned operative mode AOM which is assigned to a resource object 26, observation of a local release status LRS prior to start of task execution through a processing resource, or observation of safety conditions SAF prior to start of task execution through a processing resource. Further to the above, observations instances may be configured according to specific task execution requirements.

While above observations have been described with respect to observation sizes 34 it should be noted that according to the present invention it is also possible to observe poses. A pose is defined by an observer capability set in combination with conditions imposed on observation sizes 34 covered by the observer capability set 76.

Generally, a pose carries a name and allows for an abstract view on observation sizes 34 as only specific observations are considered and not all possible observations. Poses reflect degrees of freedom during operation of usable processing resources which have conditions imposed thereon. Once all conditions are met, the pose is observed. E.g., it might be enough to know that within a certain room all doors are closed without necessarily knowing how much doors are provided for that room and which doors are opened and which doors are closed.

Fig. 6 shows a further detailed schematic diagram of the observer 36 shown in Fig. 2.

As shown in Fig. 6, the observer 36 comprises at least one observation instance 82, an observation configurator 84, and an observation controller 86. The observer configurator 84 has access to the observer capability template pool 88 and the observer capability set template pool 90.

Operatively, the at least one observation instance 82 is adapted to execute an observation process as defined by an observation capability set 76.

Further, operatively the observation configurator 84 is adapted to configure the at least one observation instance 82. Heretofore, the observation configurator 84 has access the observer capability template pool 88 and the observer capability set template pool 90 for loading at least one observation capability template 78 and/or at least one observation capability set template 80.

Further, operatively the observation configurator 84 is adapted to use the at least one observation capability template 78 and/or at least one observation capability set template 80 into at least one observation instance 82.

Here, the observation capability template 78 specifies how an observation size is actually observed. This may imply specification of a related sensor, identification of an access for readout of stored measurement data in relation to an observation size, specification of communication protocol for access to a observation size sensor, etc. Also, the observation capability template 78 may specify a data format required for supply of captured observation size related data to at least one signature 30.

Further, observation capabilities 74 are grouped into a related observation capability set 76 for setup of observation instances 66. The use of observation capability set templates 80 allow to map process knowledge into observation processes and to setup the observation-based feedback loop 62 in a flexible manner. In cases where a plurality of resource objects 26 use identical observation processes only one observation capability set template needs to be specified.

Further, the observation controller 86 is adapted to control the operation of the observation instances 82 and the observation configurator 84. Once the observation configurator 84 has configured the observation instances 82 required for setup of an observation-based feedback loop 62 the observation controller 86 is adapted to control tracking of at least one operative status which prevails in the modular processing system 10 through use of at least one observer instance 82.

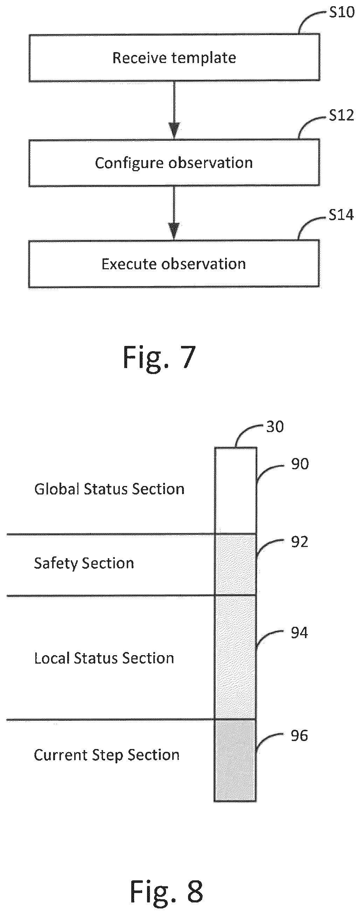

Fig. 7 shows a flowchart of operation for the observer 36 shown in Fig. 6.

As shown in Fig. 7, in a step S10, operatively being executed by the observation configurator 84, there is executed an access to the observer capability template pool 88 and the observer capability set template pool 90 for loading at least one observation capability template and/or at least one observation capability set template.

As shown in Fig. 7, in a step S12, operatively being executed by the observation configurator 84, there is executed a configuration of the at least one observation instance 82. The execution of step S12 relies on the use of the at one observer capability template and/or use of the at least one observer capability set template.

As shown in Fig. 7, in a step S14, operatively being executed by the observation controller 86, there is executed a control of observation of at least one observation size 34 which is observable in the modular processing system 10 through the at least one observation instance 66.

It should be noted that according to the present invention in step S14 the observation of the at least one observer instance 66 is controlled independently from any task execution and continuously. Further, the step S14 is executed such that a plurality of observer instances 66 are observed independently from each other and in parallel.

Fig. 8 shows a basic structure of a resource object signature 30 which is used for control of a resource object operation according to the present invention.

As shown in Fig. 8, a basic structure of a signature 30 divides into a global status section 90, a safety section 92, a local status section 94, and a current step section 96.

Here, the global status section 90 and the safety section 92 are set outside of a resource 26. The global status section 90 reflects an overall operative status prevailing in the modular processing system 10 outside the resource object 26 and the safety section 92 is related to at least one externally defined condition which must be met prior to execution of a task 28.

Further, the local status section 94 is a reflection on a local status prevailing within a resource object 26 and is thus dependent on an internal operative state of the resource object 26.

Further, the current step section 96 is related to the execution of a process sequence by the resource object 26. Upon execution of a process sequence there is continuously tracked a status of a currently executed step which is reflected within the current step section 96.

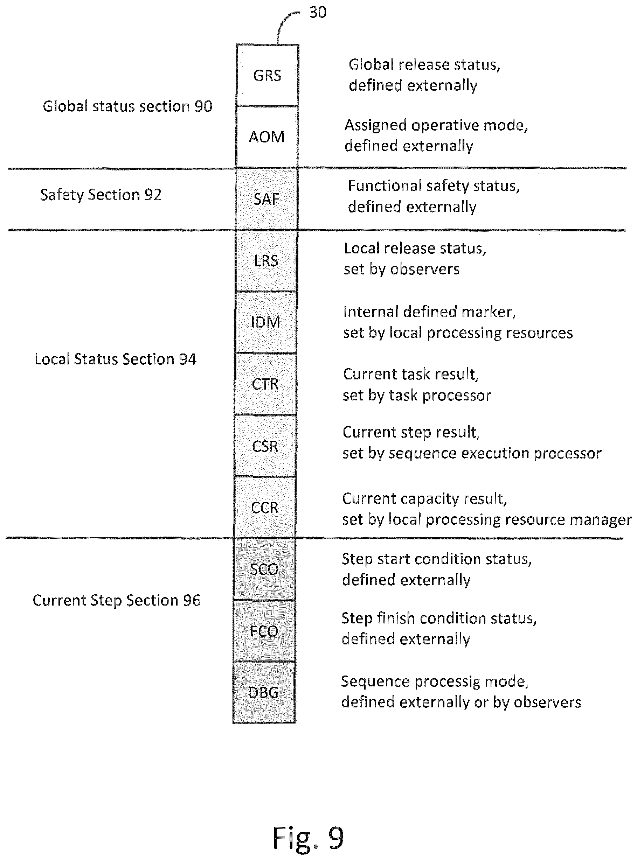

Fig. 9 shows a further detailed structure of the resource object signature shown in Fig. 8.

As shown in Fig. 9, the global status section 90 comprises at least a globally release status GRS and an assigned operative mode AOM. The global release status GRS summarizes all the status information that must prevail outside a resource object prior to start of a task execution and is externally defined. The assigned operative mode AOM is specifying an operative mode which is assigned to a resource object 26 from outside and thus is externally defined. E.g., an assigned operative mode AOM may specify a specific mode of operation for the resource object 26 or may instruct immediate stop of operation upon occurrence of an error within the modular processing system 10.

As shown in Fig. 9, the safety section 92 defines a functional safety status SAF and is externally defined. The specification of the safety section SAF is related to the setup of a process plan for the modular processing system 10 and requires process knowledge.

As shown in Fig. 9, the local status section 96 comprises a local release status LRS. The local release status LRS reflects a local status that must prevail within the resource object 12 prior to start of task execution and is set by observers instances 82. The local release status LRS may be different for every task and serves to protect local processing resources within a resource object 12.

As shown in Fig. 8, the local status section 96 comprises an internal defined marker IDM which is set by local processing resources. The internal defined marker IDM is a named internally defined marker and set when a combination of observation results of a group of observers instances 82 fulfill a predetermined pattern of required observations or observation assessment results.

As shown in Fig. 9, the local status section 96 comprises the current task result CTR which continuously reflects a status of task execution during operation of a resource object 26. It is set it is set internally by the resource object 26. It serves to control task execution through a resource object 26.

As shown in Fig. 9, the local state is section 96 comprises a current step result CSR which is set during execution of a process sequence through the resource object 26. The current step result CSR is continuously referenced during execution of a process sequence for control of execution of the process sequence.

As shown in Fig. 9, the local status section 96 comprises the current capacity result CCR which is set internally within the resource object 26 upon use of a local capability/function for task execution.

As shown in Fig. 9, the current step section 96 relates to the execution of a process sequence comprising at least one step. The current step section 96 comprises a step start condition status SCO and a step finish condition status FCO to be checked upon start and stop of a step. Both are set externally. Also, the current step section 96 comprises a section DBG defining a sequence processing mode which is set externally or alternatively for at least one observer instance 82e. The section DBG allows to switch between a continuous operation on steps of a process sequence or a step-by-step mode for testing and debugging of a process sequence.

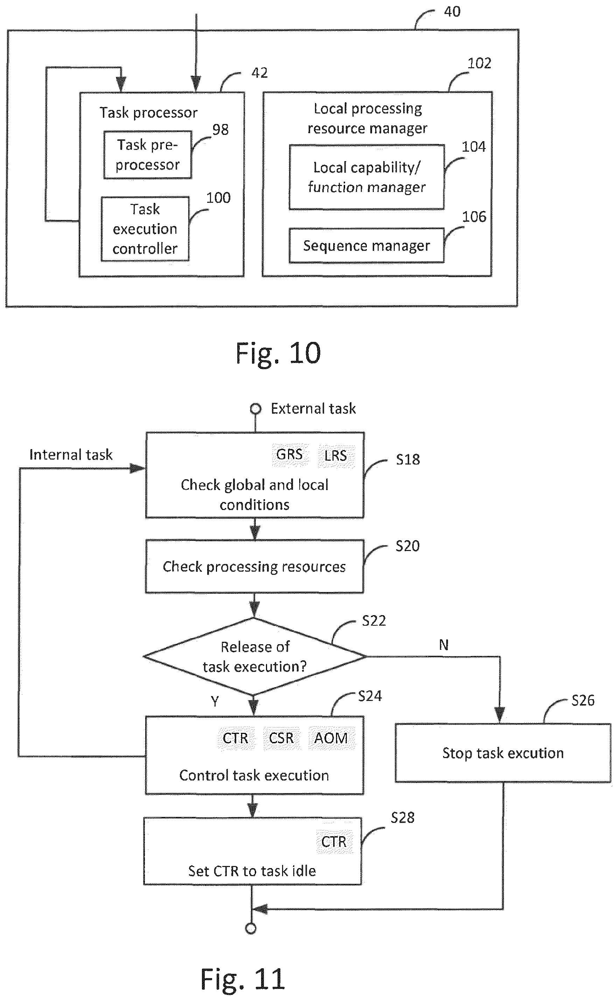

Fig. 10 shows a further detailed schematic diagram of the task processor 42 and the processing resources 44 shown in Fig. 2.

As shown in Fig. 10, the task processor 42 comprises a task pre-processor 98 and a task execution controller 100.

As shown in Fig. 10, the task pre-processor 98 is adapted to accept a task 28 submitted to the task processor 42 and to evaluate whether the task is accepted for task execution.

As shown in Fig. 10, a task 28 to be processed by the task processor 42 may be an external task submitted from outside to the resource object 26 or an internal task which is generated internally during task execution by the resource object 26. Here an internal task may be a subtask identified during execution of a process sequence step as will be explained in the following, or a task that arises, e.g., due to an error constellation or a change in a signature 30 which blocks continuation of a task execution.

Further, the task execution controller 100 is adapted to decide on which processing resource usable by the resource object 26 processes the task execution. Heretofore, a local processing resource manager 102 is adapted to provide a processing resource which may be used by the task execution controller 100 for task execution. In more detail, the local processing resource manager 102 may provide either a local capability/function available from a local capability/function manager 104 or a process sequence or a sequence in short handled by a sequence manager 106.

Fig. 11 shows a flowchart of operation for the resource object base part shown in Fig. 10.

As shown in Fig. 11, in a step S18, operatively being executed by the task pre-processor 98, it is checked whether global conditions prevailing in the modular processing system 10 are appropriate for task execution.

In more detail, it is checked whether a global release status GRS that is represented by the resource object signature 30 and must prevail as a condition for release of task execution matches with a requested operative status as specified in relation to the task and the resource object 26.

Further, it is checked whether a local release status LRS that is represented by the resource object signature 30 and must prevail locally at the resource object 26 as a condition for release of task execution matches with a requested operative status as specified in relation to the task and the resource object 26.

As shown in Fig. 11, in a step S20, operatively being executed by the task pre-processor 98, it is checked whether at least one processing resource which is usable by the resource object 26 matches with the requirements of a submitted task 28 irrespective of whether the submitted task 28 is an external task or an internal task. In more detail, it is checked whether at least one selected processing resource usable by the resource object 26 has a capability specification matching with the requested capability specification of the task and/or a resource specification matching with the requested resource specification of the task.

As shown in Fig. 11, upon release of task execution in step S22, operatively being executed by the task pre-processor 98, there follows a step S24, operatively being executed by the task execution controller 100, to control task execution by at least one selected processing resource in observation of the resource object signature 30. Heretofore, the task execution controller 100 will access different sections of the resource object signature 30 such as current task result CTR, the current step result CSR, and the assigned operative mode AOM.

As shown in Fig. 11, when task execution is not released in step S22, there follows a step S26, operatively being executed by the task execution controller 100, to stop task execution. To the contrary, upon successful task execution, subsequent to step S24 there follows a step S28, operatively being executed by the task execution controller 100, to set the current task result CTR to task idle.

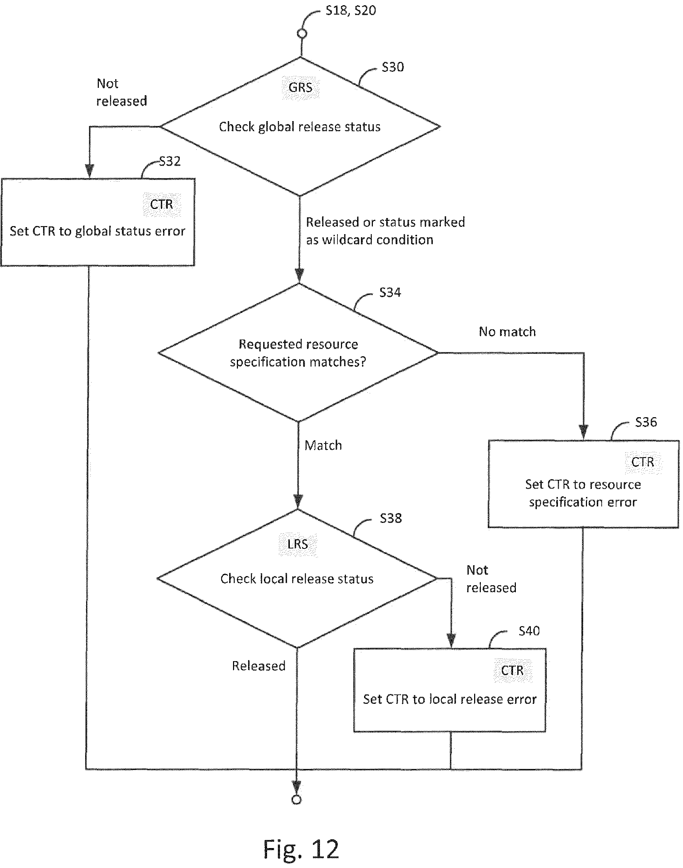

Fig. 12 shows a further detailed flowchart of operation in relation to a checking global release condition, a local release condition, and processing resources prior to task execution release. It should be noted that all steps illustrated in Fig. 12 are operatively executed by the task pre-processor 98.

As shown in Fig. 12, in a step S30 there is executed a check whether a global release status GRS matches with a requested global release status specified for a task under consideration through access to the resource object signature 30. If such check shows that the global release status GRS does not match with the requested global release status then the section current task result CTR will be set to a global state error in step S32. Alternatively, when the global release status matches with the requested global release status or is marked as wild card condition the execution process proceeds with step S34.

As shown in Fig. 12, in step S34 it is checked whether a requested resource specification of a task under consideration matches with usable processing resources of a resource object 12. If there is no match the section current task result CTR of the signature section 14 will be set to resource specification error in step S36.

As shown in Fig. 12, when there is a match with a requested resource specification the next step S38 executes a check of a local release status LRS. The local release section LRS represents a local status that prevails inside the resource object 26 and must match with a requested local status specified for the resource object 26 as a condition for release of task execution.

Further, a match in step S38 implies that any resource usable by the resource object 26 is available for task execution or that a specific processing resource usable by the resource object 12 matches with the requested resource specification set forth in a task specification.

As shown in Fig. 12, when also the local release status LRS matches with a requested local release status the task execution is released. Otherwise, the section current task result of the signature 30 of the resource object 26 will be set to local release error in step S40.

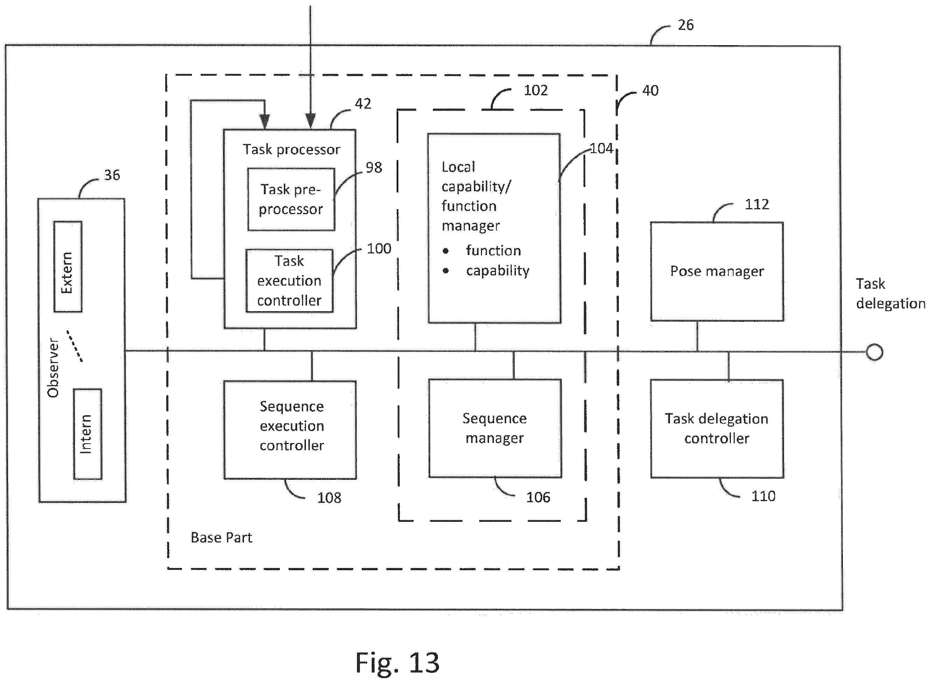

Fig. 13 shows a further detailed schematic diagram of the resource object 26 according to the present in invention shown in Fig. 2 and Fig. 10.

As shown in Fig. 13, in addition to the components described above the resource object 26 also comprises a sequence execution controller 108, a task delegation controller 110, and a pose manager 112.

Operatively, the sequence execution controller 108 has access to the sequence manager 106 and to all process sequences handles by the sequence manager 106. Also, when the task execution controller 100 selects a sequence execution process as basis for a task execution then the sequence execution controller 108 is adapted to control execution of a process sequence selected for task execution.

Further, operatively the task delegation controller 110 is adapted to delegate the processing of a task submitted to the resource object 26 to yet another delegation target resource object 26 operated in the modular processing system 10. As already explained with respect to Fig. 2 once such task delegation occurs any sequential monitoring of the delegation target resource object 26 is not necessary as upon task delegation the full responsibility for handling the task is handed over to the task delegation target resource object 26.

As shown in Fig. 13, the resource object 12 comprises a pose manager 112. Here, a pose defines a combination of observations that must fit to a predetermined pose pattern which allows for setting of internal defined markers IDM. These internal defined markers IDM serve as entry points for start of different process sequences or as re-entry points for operation of the resource object 26 upon occurrence of an operative error.

The remaining components of the resource object 26 as shown in Fig. 13 have already been described above and a repeated description thereof will be omitted here.

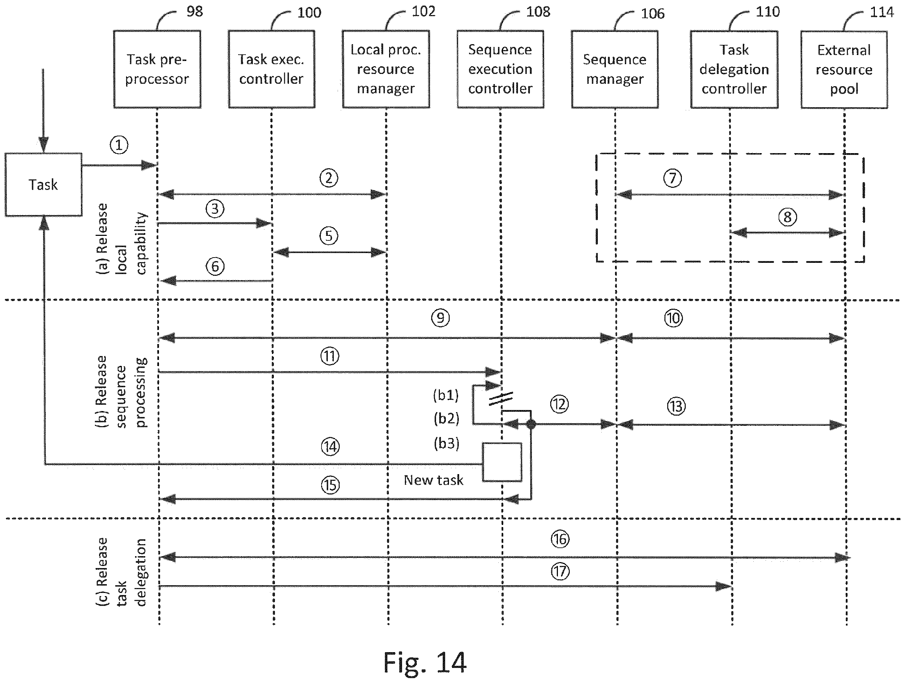

Fig. 14 shows an interoperation of the functional units shown in Fig. 13 according to a scenario (a) task execution through use of a local capability/function, (b) task execution through execution of a process sequence, and (c) task execution by task delegation, respectively. Interoperation between the functional units are referenced through circled numbers.

As shown in Fig. 14, the first scenario (a) relates to task execution through use of a local capability/function ① to ⑥.

As shown in Fig. 14, a task is submitted to the task pre-processor 98. Then the task pre-processor 98 will interoperate with the local processing resource manager 102 to check on availability of a local capability/function for processing the task ②. If a local capacity/function is available, then the task pre-processor 98 will instruct the task execution controller 100 to control task execution ③. The task execution controller 100 will then control a task execution through a selected local capability/function . Finally, the task execution controller at 100 will provide a result of task execution to the task pre-processor 98 ⑥.

As shown in Fig. 14, according to the present invention the resource object 26 is also adapted to interoperate with an external resource pool 114. Operatively, the external resource pool 114 is adapted to provide information and access to processing resources which are usable by the resource object 26, however, handled outside the resource object 26. Such processing resources may be, e.g., process sequences which may be loaded into the sequence manager 106 ⑦ for subsequent use by the sequence execution controller 108. Alternatively, such processing resources may be, e.g., a reference to resource object 26 that can be a target of a task delegation processing or in other words take over task execution from a delegating resource object 26.

As shown in Fig. 14, a second scenario (b) relates to task execution through execution of a process sequence ⑨ to ⑮. It should be noted that this scenario becomes relevant only when no local capability/function is available for task execution, see ②.

As shown in Fig. 14, upon entry into the second scenario the task pre-processor 98 checks with the sequence manager 106 whether a process sequence providing a capability as requested by a task is handled by the sequence manager 106 ⑨. If not, the sequence manager 106 may access the external resource pool 114 to resolve the issue ⑩. In case a process sequence providing a requested capability is available, then the task pre-processor 98 will instruct the sequence execution controller 108 through the task execution controller 100 to control execution of the process sequence ⑪.

As shown in Fig. 14, during execution of a process sequence different sub-scenarios may occur.

As shown in Fig, 14, a first sub-scenario (b1) is that the step(s) of the process sequence are executed one-by-one. If so, upon termination of execution of the process sequence a related processing result will be forwarded to the task pre-processor 98 ⑮.

As shown in Fig. 14, a second sub-scenario (b2) is related to a case where operative conditions change, e.g., due to a change of the signature 30 of the resource object 26, e.g., in relation to the global release status GRS or the local release status LRS where a sequence which is currently executed must be stopped. Then, the sequence execution controller 108 may access the sequence manager 106 directly ⑫ or the the external resource pool 114 indirectly via the sequence manager 106 ⑬ to find a process sequence which is appropriate for given constellation. Then, the task execution either continues with the new process sequence or the task execution is terminated and related processing result is forwarded to the task pre-processor 98 ⑮.

As shown in Fig. 14, a third sub-scenario (b3) is related to a case where during execution of a process sequence step an unexpected error or external event occurs thus requesting handling of a new task dealing with this unanticipated situation. In the latter scenario (b3) the new task will be fed back as internal task to the task pre-processor 98 for subsequent processing thereof ⑭.

As shown in Fig. 14, the third scenario (c) relates to task execution through task delegation ⑯ ⑰. It should be noted that this scenario becomes relevant only when no process sequence for task execution is available, see ⑫ ⑬.

As shown in Fig. 14, according to the third scenario the task pre-processor 98 will interoperate with the external resource pool 114 to check on availability of an external delegation target resource object 26 that can handle a task under consideration ⑯. If so, the task pre-processor 98 will delegate the handling of the task under consideration to the delegation target resource object 26 ⑰.

It is important to understand that according to the present invention once a task is delegated the delegating resource object 26 is no longer involved in the handling thereof and no sequential monitoring of task execution of a delegated task is to be executed by the delegating resource object 26. If necessary, a feedback of status with respect to a delegated task is established via the observation-based feedback loop 62 outlined above with respect to Fig. 4.

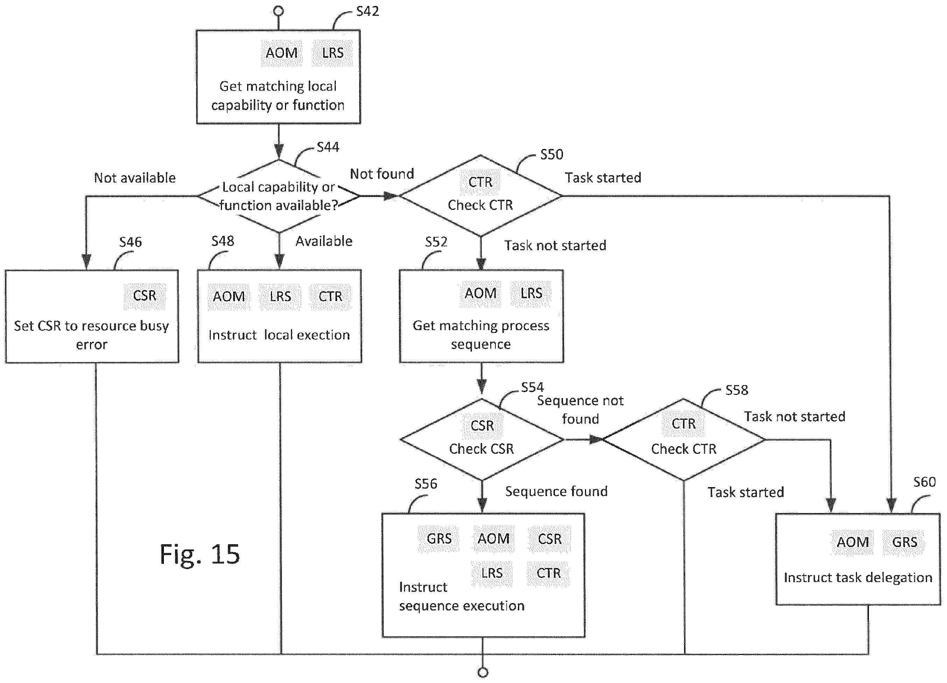

Fig. 15 shows a flowchart of operation for the task pre-processor 98 with respect to instructing task execution through a local capability/function, a process sequence providing a requested capability upon execution thereof, or through delegation of task execution to a further resource object.

It should be noted that all steps illustrated in Fig. 15 are operatively executed by the task pre-processor 98.

As shown in Fig. 15, in a step S42 a requested capability specification and/or requested resource specification for a task under consideration is submitted to a local processing resource manager 102 of the resource object 26 for identification of a selected processing resource in the form of a matching local capability/function. Prior to submission of the requested capability specification and/or requested resource specification to the local processing resource manager 102 also the assigned operation mode section AOM and the local release status section LRS are checked in step S42 to verify operative conditions for execution of the step S42.

As shown in Fig. 15, in a step S44 it is checked whether a local capability/function having capability specification and/or resource specification matching with the requested capability specification and/or requested resource specification for a task under consideration is available from the local processing resource manager 102.

As shown in Fig. 15, in a step S46 the current step result section CSR is set to resource busy error when a local capability/function is not available for task execution. Otherwise, in a step S48 there is instructed the operation of the matching local capability/function. This instruction in step S48 is subject to a check of the assigned operation mode section AOM, the local release status section LRS and the current task result section CTR to verify operative conditions for execution of the step S48.

As shown in Fig. 15, when a local capability/function is not available in a step S50 the current task result section CTR is checked in order to decide on whether task execution is continued with local sequence processing when a task is not started or to continue with instruction of task delegation when a task is started.

As shown in Fig. 15, task execution is continued with local sequence processing then there follows a step S52 to submit a requested capability specification to the sequence manager 106 for identification of a selected processing resource in the form of a process sequence providing the requested capability specification upon execution thereof. Here, the assigned operation mode section AOM and the local release status section LRS are checked prior to submission of the requested capability specification to the sequence manager 106 to verify operative conditions of step S52.

As shown in Fig. 15, subsequent to step S52 there follows a step S54 to check the current step result section CSR to check whether a process sequence providing the requested capability upon execution thereof is available or not. Upon availability, in a step S56 there is instructed the execution of the process sequence providing the requested capability upon execution thereof.

To verify the operative conditions for the instruction step S56 prior to the instruction there is executed a check of the global release status section GRS, the assigned operation mode section AOM, the current step result section CRS, the local release status section LRS and the current task result section CTR of the resource object signature 30.

As shown in Fig. 15, following the checking of the current step result section CSR in step S54 there is executed a step S58 to check the current task result section CTR when no process sequence is available to find out whether a task has started or not. If a task has started, then a task execution is not possible. Otherwise, there is executed a step S60 to instruct delegation of task execution with respect to a task under consideration.

In conclusion, according to the present invention instruction of task execution through a local capability/function, a process sequence or through delegation of task execution to a further resource object is achieved dynamically at the time of task execution. As processing resources are assigned dynamically flexibility for task execution is increased significantly and resource objects max execute autonomous configuration in response to a task submitted thereto in real time.

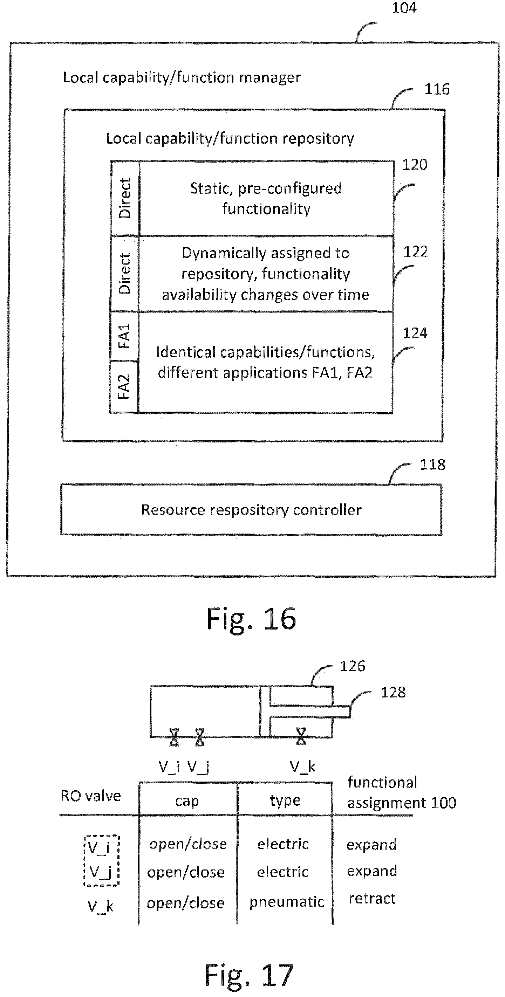

Fig. 16 shows a further detailed schematic diagram for a local capability/function manager 104 shown in Fig. 10.

As shown in Fig. 16, the local capability/function manager 104 comprises a local capability/function repository 116 and a local processing resource controller 118.

As shown in Fig. 16, the local capability/function repository 116 provides a different ways access to and type of local capabilities/functions.

Further, operatively the local processing resource controller 118 is adapted to control operation of the local capability/function repository 116 and to handle inquires for local capabilities/functions.

As shown in Fig. 16, a first access is a direct access 120 to at least one local capability/function which is pre-configured into a resource object 26 in a static manner. Thus, the local capability/function will be available at any time during operation irrespective of an operative status of the resource object 26.

As shown in Fig 16, a second access is a direct access 122 to at least one dynamically assigned capability/fractional functionality. The second direct access 122 is applicable when during operation of a resource object 26 at least one local capability/function is available only upon entry of the resource object 26 into a certain operative status. As an operative status of a resource object 26 may change over time, then only during certain periods in time it may be an option to use a dynamically assigned local capability/function.

An example for dynamic assignment of a local capability/function may be an AGV robot which is positioned at a certain position which allows loading of the AGV only during positioning at the certain position while otherwise the AGV robot will transport goods and move in the modular processing system 10.

As shown in Fig. 16, yet another option for access to a local capabilities/function relies on a functional assignment 100 in support of a differentiated access through logical references to a plurality of local capabilities/ functions having a same construction but a different technical effect.

Thus, functional assignments 100 allow to address partial functionalities of local capabilities/functions to achieve matches to tasks while shielding specifics of local capabilities/functions to the outside. They use logical names for partial functionalities and encapsulate specific knowledge on related local capabilities/function through use of data structures describing the partial functionalities and being parametrized by tasks during run time. Functional assignments support unambiguous access to plurality of local capabilities/functions in the local capability/function repository 106 which have a same construction but a different technical effect.

Fig. 17 shows an example of functional assignments as means for differentiation between local capabilities/functions having identical construction but being used to achieve different functional effects.

As shown in Fig. 17, an example for the use of a functional assignment may be a linear cylinder 126 which has a piston 128 and a plurality of valve v_i, v_j, and v_k provided for expansion and retraction of the piston 128 within the linear cylinder 126.

As shown in Fig. 17, the valves v_i and v_j which operatively expand the piston 128 have a same functional assignment expand, while the valve v_k which is provided for retraction of the piston 128 has a functional assignment retract. During runtime, then a task may only specify a functional assignment expand or retract leaving it to the task execution controller 100 to resolve the functional assignment expand to an actual valve v_i, v_j or to both v_i and v_j.

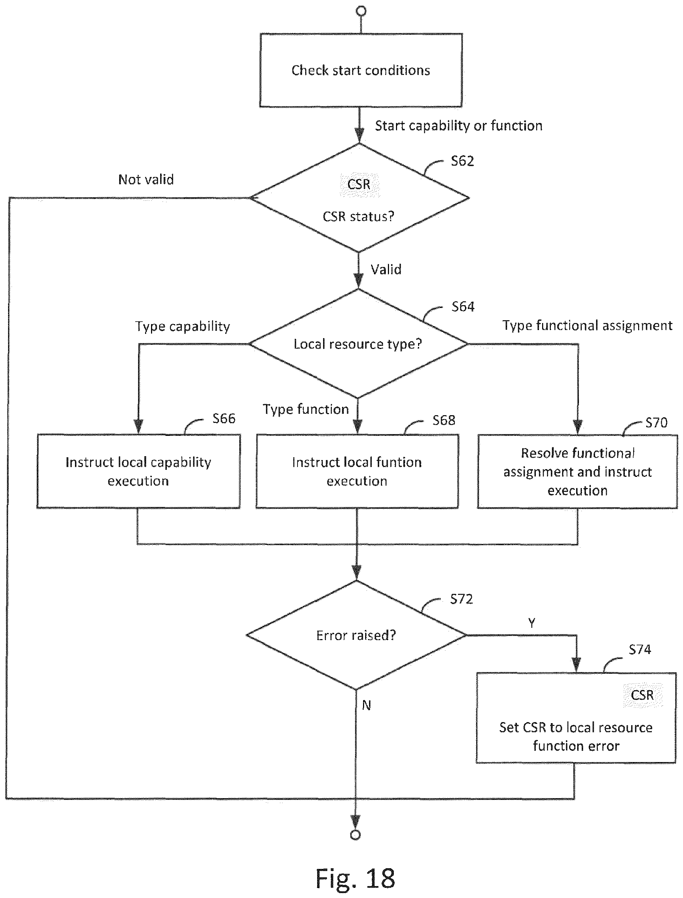

In conclusion, above the operation of the task pre-processor 98 with respect to acceptance of a task 28 and to identification of a processing resource which is usable for task execution has been described with reference to Fig. 10 to 17. In the following, the description will focus on control of task execution by the task execution controller 100 with reference to Fig. 18 to Fig. 30. It should be noted that such control is executed by the task execution controller 100 shown in Fig. 10.

Generally, the starting point for the operation of the task execution controller 100 is the processing result of the task pre-processor 98. Such processing result specifies type of task execution, i.e., local execution, execution by process sequence, or execution by task delegation. The processing result of the task pre-processor 98 also specifies at least one processing resource usable by the resource object 26 for task execution.

Further, when the processing result of the task pre-processor 98 specifies a plurality of processing resources, then task execution controller 100 is adapted to select at least one processing resource for task execution from the plurality of processing resources at a time of task execution start. Preferably, the task execution controller 100 is adapted to apply an assignment cost function during selection from the plurality of selected processing resources.

Further, according to the present invention such selection at a time of task execution start means selection as late as possible in time, in particular with respect to dynamically available processing resources. The particular benefit of such an approach that it maximizes the number of processing resources considered for task execution compared to a conventional scenario where a process plan is defined upfront without consideration of in situ and real time process status knowledge.

Further, another aspect mentioned above with respect to Fig. 14 is related to the generation of an internal task which is triggered by execution of a process sequence selected for task execution or by a change in the resource object signature 30 due to an external event. In such case the task execution controller 100 is adapted to submit the internal task to the task pre-processor 98 for subsequent processing thereof.

In the following, the description will focus in more detail on control of task execution by the task execution controller 100 in relation to task execution by local capability/function, by process sequence, and by task delegation. It should be noted that a related control is executed by the task execution controller 100 shown in Fig. 10.

Fig. 18 shows a flowchart of operation for the task execution controller 100 shown in Fig. 10 with respect to task execution by a local capability/function.

As shown in Fig. 18, when a matching local capability/function is available for task execution in a step S62 there is executed a check in relation to the active current step result section CSR of the resource object signature 30 to verify an operative status of the resource object 26 prior to task execution.

As shown in Fig. 18, in a step S64 there is identified a type of mapping local capability/function S64 according to mapping local capability, mapping local function and local capability/function being accessible via a functional assignment 124 used for differentiation between local capabilities/functions having an identical specification but a different technical effect upon activation, as outlined above.

As outlined above, a functional assignment defines a functional relation between local capabilities/ functions and enables an addressing independent of a specific ID of a local capability/function. When using a local capability/function via a functional assignment, then all local capabilities/functions having this functional assignment must carry the resource specification request by a task 28 to be executed.

Further, exactly one local capability/function may be assigned for task execution and should a plurality of local capabilities functions carry a same functional assignment, then the selection of an executing local capability/function is subject to application of predetermined criteria to optimize a selection result.

As shown in Fig. 18, then follow steps S66, S68, S70 to instruct execution of the mapping local capability/function according to identified type. Heretofore, in step S70 a functional assignment is resolved to a specific matching local capability/function 64 prior to task execution.

As shown in Fig. 18, a step S72 is executed to check a task execution result achieved by the matching local capability/function. Also, in step S74 the current step result section is set CSR of the resource object signature to a function error upon occurrence of an error.

In conclusion, a task resolution on the basis of a local capability/function is the most intuitive approach to task execution. According to the present invention a particular benefit is that the local capabilities allow for a dynamic assignment of local processing resources over time during operation are the modular processing system 10. This increases flexibility and reflects a change of operative status in the modular processing system 10 such that always an optimum assignment of a matching local capability/function is achievable.

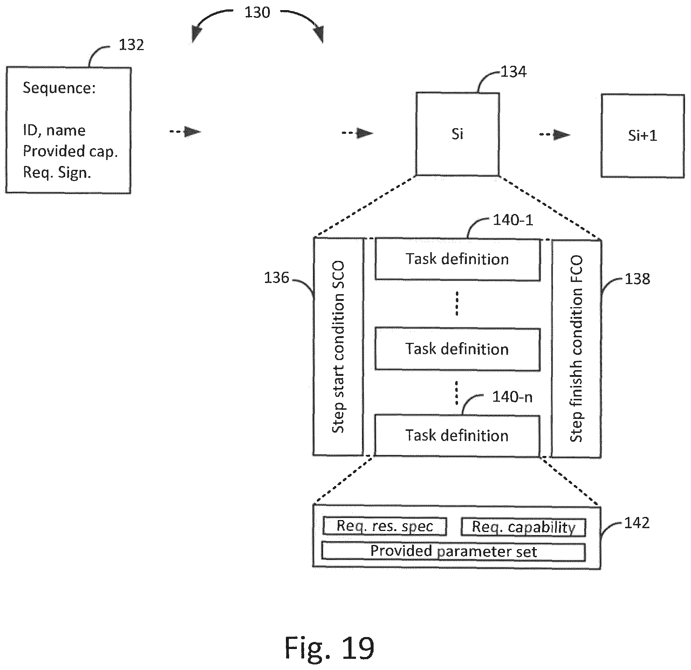

Fig. 19 shows a process sequence wherein each step of the process sequence has assigned thereto a step start condition, a step stop condition, and at least one task definition for a task to be executed as part of a step execution.

As shown in Fig. 19, every process sequence 130 has a header 132 carrying information which is relevant for handling the process sequence 130. A process sequence 130 may be addressed via an ID or a name. The name is a local name and used within a resource object 26 executing the process sequence 130. Further, by executing the process sequence 130 there is provided a specific capability for task execution which may be used as external reference to the process sequence 130.

Generally, prior to start of a process sequence 130 there will be executed a check of the assigned operation mode section AOM, the local release status section LRS, the current step result section CSR, and optionally the internally defined marker section IDM to evaluate the operative conditions for start of the process sequence. The internally defined marker section IDM serves to fix an operative status where the execution of the process sequence 130 may be interrupted and/or restarted.

As shown in Fig. 19, a process sequence 130 comprises at least one step S134 being specified by a step start condition SCO 136 and a step finish condition SFO 138. Also, the execution of at least one step S134 requires execution of at least one sub-task 140 which is again being defined according to requested resource specification, requested capability, and provide parameter set, see 142.

As shown in Fig. 19, an execution of the step S134 implies in a verification of the step start condition SCO 136, the execution of the step related sub-tasks 140, and the verification of the step finish condition FCO 138. It should be noted that after the verification of the step start condition 136 SCO, then the step related sub-tasks 140 are processed without any reconsideration of the step start condition 136. This implies, tat the step related sub-tasks 140 may be executed independently from each other and in parallel for an increase of processing efficiency.

Further, upon occurrence of a failure during execution of a process sequence 130 a first option to deal with the failure scenario would be issuance of an error message. A second option would be to identify yet another process sequence that can cope with the failure scenario. After resolution of the failure constellation, then the interrupted process sequence may be continued through use of the internally defined marker section IDM.

Overall, during execution of a process sequence 130 implies access to at least local capability/function of the resource object 26 executing the process sequence 130.

Here, when a plurality of local capabilities/functions are used for an execution of a process sequence, then the definition of the process sequence 130 allows for an orchestration of operation of the plurality of local capabilities/functions. Thus, there is provided to provide a capability which is extended in relation to the single capabilities of each single local capability/function in the plurality of local capabilities/functions.

Further, when a process sequence 130 comprises only one step using only one step sub-task 140 this is equivalent use of a local capability/function. Nevertheless, it is still possible to specify a step start condition SCO 136 and a step finish condition SFO 138 for the operation local capability/function.

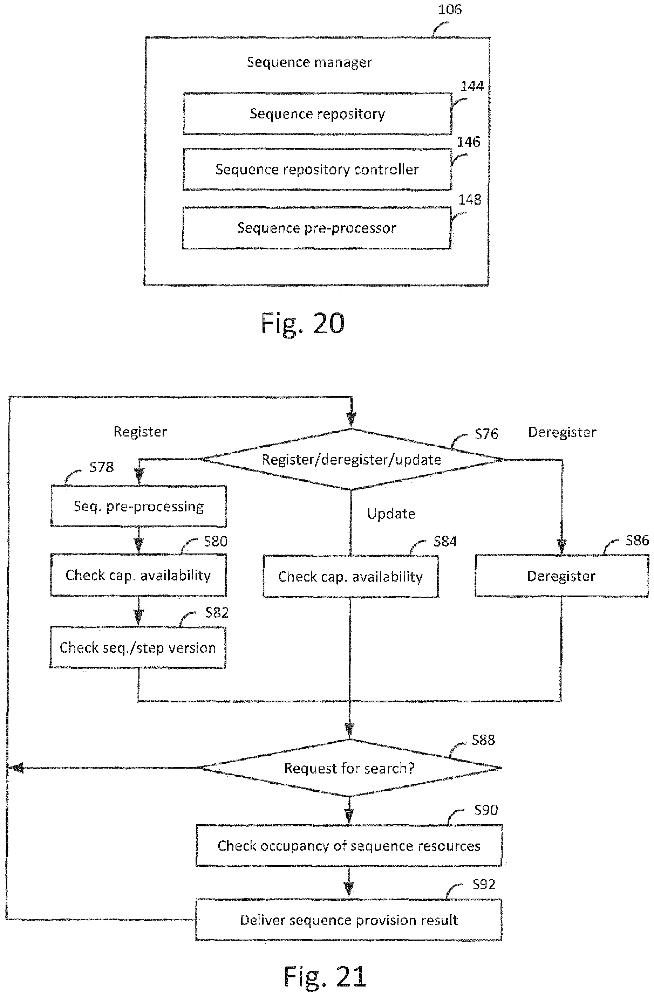

Fig. 20 shows a further detailed schematic diagram for a sequence manager 106 shown in Fig. 10.

As shown in Fig 20, the sequence manager 106 comprises a sequence repository 144, a sequence repository controller 146, and a sequence pre-processor 148.

Operatively, the sequence repository 144 is adapted to store at least one process sequence 130 which provides a predetermined capability upon execution thereof.

Here, every process sequence registered in the sequence repository 144 is named like a requested capability and marked with a currently assigned operative mode AOM or empty, a current local release status CRS or empty, and internally defined marker IDM or empty, and a current step result CSR or empty. This marking supports handling of process sequences prior to execution thereof.

Further, it should be noted that according to the present invention for every registered capability/function registered in the local capability function repository 116 shown in Fig. 16 there should be registered a corresponding process sequence in the sequence repository 144 as otherwise it is not known under which conditions the local capability/function may be used.

Further, operatively the sequence repository controller 146 is adapted to search the process sequence repository 144 in response to submission of a requested capability specification to the sequence manager 106. Should a search for a process sequence 130 unveil a plurality of process sequences providing a same requested capability, then the sequence repository controller 146 is adapted to select a final process sequence for delivery thereof through application of a selection cost function which optimizes the search result.

Also, the sequence repository controller 146 is adapted to continuously register/deregister process sequences 130 with the sequence repository 144 depending on the operative status of the resource object 26 running the sequence manager 106 and availability of process sequence.

Further, operatively the sequence pre-processor 148 is adapted to pre-process process sequences 130.

Here, a first pre-processing relates to the identification of at least one local capability/function available from the local capability/function manager 104 which are involved in the execution of the process sequence.

A second pre-processing relates to impact of availability of a local capability involved in the execution of the process sequence. As such availability is varying over time a certain process sequence may be available for execution at a first instance in time and non-available at another instance in time depending on the availability of the local capability.

A third pre-processing is related to handling of information in relation to the process sequence 130 such as version management, ID and name handling, etc.

It should be noted that the use of a sequence manager 106 increases operative flexibility of the resource object 26. The sequence manager 106 supports a real time and autonomous configuration within the resource object 26 in response to processing requirements resulting from submission of tasks 28 to the resource object 26. Also, through access to an external processing resource pool 114, it is possible to continuously expand the options for capability provision within the resource object 26 using the sequence manager 106.

Fig. 21 shows a flowchart of operation for the sequence manager 106 shown in Fig. 20.

As shown in Fig. 21, during the during operation of the sequence manager there is a continuous toggling between management of processing sequences availability and process sequence search.

As shown in Fig. 21, in a step S76, operatively being executed by the sequence repository controller 146, for management of process sequences by the sequence manager 106 three options are checked as (a) registration of a new process sequence, (b) update on availability of process sequences currently being registered in the sequence repository, (c) deregistration of a process sequence from the sequence repository 144.

As shown in Fig. 21, during registration of a new process sequence according to option (a) the sequence pre-processor 148 will execute a series of steps prior to registration of the new process sequence in the sequence repository 144 through the sequence repository controller 146. E.g., a process sequence to be registered may be provided from a process sequence pool operated externally to the resource object 26. Alternatively, a process sequence to be registered at the sequence manager 106 may be provided from a process sequence design system operated outside the resource object 26.

As shown in Fig. 21, in a step S80, operatively being executed by the sequence pre-processor 148, there is executed a resolution of at least one requested specification referenced by a at least one process sequence step to at least one matching local processing resource which is available from the local capability/function manager 104 of the resource object 26. Here, local capabilities are marked as dynamic to indicate that availability local capabilities must be checked prior to process sequence execution while local functions are marked as static and thus may be assigned directly to a process sequence.

As shown in Fig. 21, in a step S80, operatively being executed by the sequence pre-processor 148, a process sequence is marked as available when all matching local capabilities/functions being involved in the execution of the process sequence are available at the time of sequence pre-processing. Otherwise, when at least executing local capability/function is not available at the time of sequence pre-processing the process sequence will be marked as non-available.

It should be noted that the marking of a process sequence is executed in real time and upon start of execution of the process sequence, i.e., as late as possible. This allows to maximize the amount of process sequence resources available for task execution as temporary non-availabilities of process sequences prior to task execution become simply irrelevant.

As an example, the reason for checking availability of matching local capabilities/functions is that local capabilities are not available continuously but only during certain periods of time, e.g., an AGV robot moving to and from a loading station may only be loaded when being positioned at the loading station. This means that also those sequences relying on local capabilities for execution thereof, e.g., a process sequence loading a product on an AGV robot, have limited executability induced by the availability of the local capabilities. Further, even local functions may be not available, e.g., due to occurrence of an operational failure thereof.

As shown in Fig. 21, in a step S82, operatively being executed by the sequence pre-processor 148, further information regarding a process sequence to be registered will be checked. E.g., one check is related to identity of version of the process sequence and related at least one process sequence step.

As shown in Fig. 21, for option (b) of update on availability of process sequences currently being registered in the sequence repository 144 there is executed a step S84, operatively being executed by the sequence pre-processor 148, which is similar to step S80.

As shown in Fig. 21, for option (c) deregistration of a process sequence, there is executed a step S86, operatively being executed by the sequence repository controller 146, to remove a process sequence from the sequence repository 144.

As shown in Fig. 21, following the management of availability of process sequences operation toggles to process sequence search.

As shown in Fig. 21, in a step S88, operatively being executed by the sequence repository controller 146, it is checked whether a search request for search request is submitted to the sequence manager 106. If this is not the case, operation branches back to management of process sequence availability.

As shown in Fig. 21, if a search request is submitted to the sequence manager 106 then in a step S90, operatively being executed by the sequence repository controller 146, there is executed a search of the sequence repository 144. When the search unveils a plurality of process sequences the sequence repository controller 146 applies a selection cost function for search result optimization.

As shown in Fig. 21, in a step S92, operatively being executed by the sequence repository controller 146, the search result will be delivered to the entity submitting the search request prior to branch back to the management of availability of process sequences.

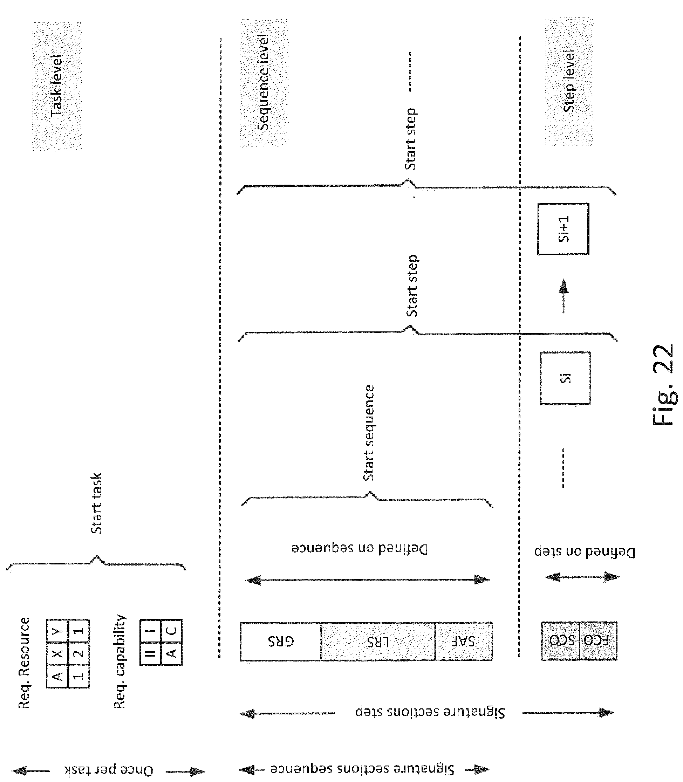

Fig. 22 shows the relevance of a task specification and signature sections for the acceptance of a task, the start of a process sequence execution, and the start of a process sequence step execution.

As shown in Fig. 22, the execution of a process sequence necessitates the examination of signature sections and task specification on different levels of operation.

As shown in Fig. 22, a first such level is a task level. Here, the requested resource specification and the requested capability expected from a process sequence upon execution thereof is examined once per task-related execution of a process sequence. The reason for this is that the process sequence is specified to provide the capability upon execution thereof so that a match with a requested capability is to examined only at a start of process sequence execution.

Also, it should be noted that the examination of a requested resource specification on a task level is only optional and not mandatory. If so, then the indication of the requested resource specification allows to bind the execution of a process sequence to certain processing resource if considered appropriate.

As shown Fig. 22, there are also sections of the research object signature 30 which are examined only once on a sequence level. Such sections are the global release status section GRS, the local release status section LRS and the functional safety status section SAF.

As shown in Fig. 22, the object resource section GRS, LRS, and SAF are also inherited by every step of the process sequence for re-examination thereof at a start of every step execution. However, the sequence related sections GRS, LRS, SAF are not re-examined when the at least sub-task 140 of each step is processed. When a plurality of sub-tasks 140 is to be processed this allows for a parallel processing of the sub-tasks.

As shown in Fig. 22, dedicated step related signature sections of the resource object signature 30 are step start conditional status section SCO and the step finish condition status section FCO. Optionally, there may also be considered the sequence processing mode section DBG of the resource object signature 30 to specify a continuous mode of process sequence execution or to specify a debugging processing mode where different steps of a process sequence are stepped through for a debugging thereof.

Further, the step start condition status section SCO and step finish condition status section FCO are considered only once at start and stop of step execution. However, these sections are not reconsidered during the sub-task execution in relation to every single sub-task 140 of a step. This leads to mutual independence of sub-task execution and supports parallel execution when a plurality of sub-tasks 140 is to be executed.

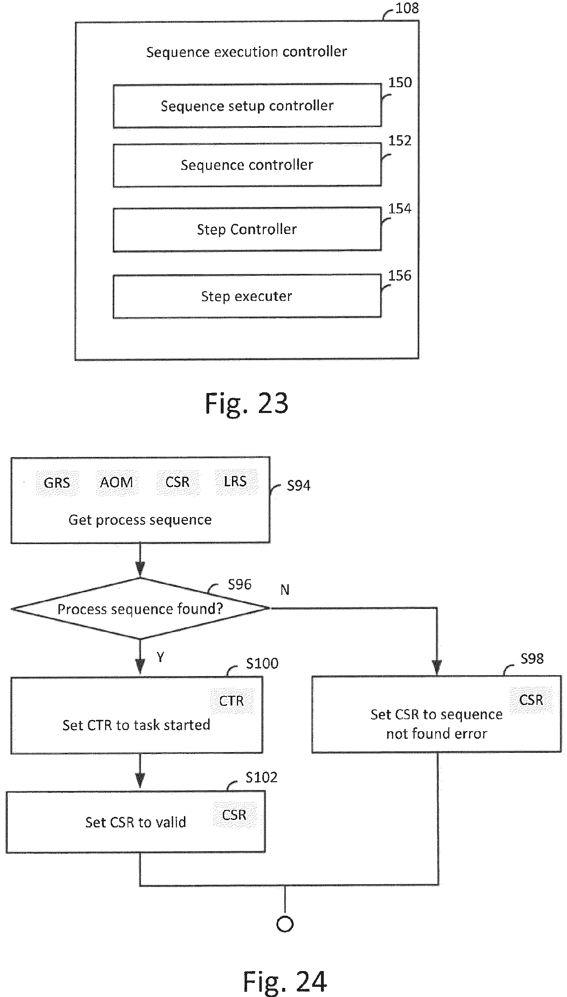

Fig. 23 shows a further detailed schematic diagram of the sequence execution controller 108 shown in Fig. 13.

While in the following the processing of the sequence execution controller 108 will be described with respect to the execution of a process sequence it should be noted that the sequence execution controller 108 is also adapted to cascade execution of a plurality a partial process sequences to provide a capability upon cascaded execution of the partial process sequences which matches with a requested capability.

Further, as outlined above the resource object signature 30 may comprise an internally defined marker IDM representing an operative status to be observed as condition for re-entry into a process sequence execution or transition from a first partial process sequence to a second partial process sequence during cascaded partial process sequence execution.

As shown in Fig. 23, the sequence execution controller 108 comprises a sequence setup controller 150, a sequence controller 152, a step controller 154, and a step execute 156.

Operatively, the sequence setup controller 150 is adapted to check availability of a process sequence for a task execution and to also check operative conditions that must be met prior to start of process sequence execution.

Further, operatively the sequence controller 152 is adapted to control execution of a process sequence once such a process sequence is available for task execution.

Further, operatively the step controller 154 is adapted to control execution of every step which is specified for a process sequence and to continuously check related operative conditions for execution of every step.

Further, operatively the step executor 156 is adapted the to handle the execution of step related sub-tasks 140.

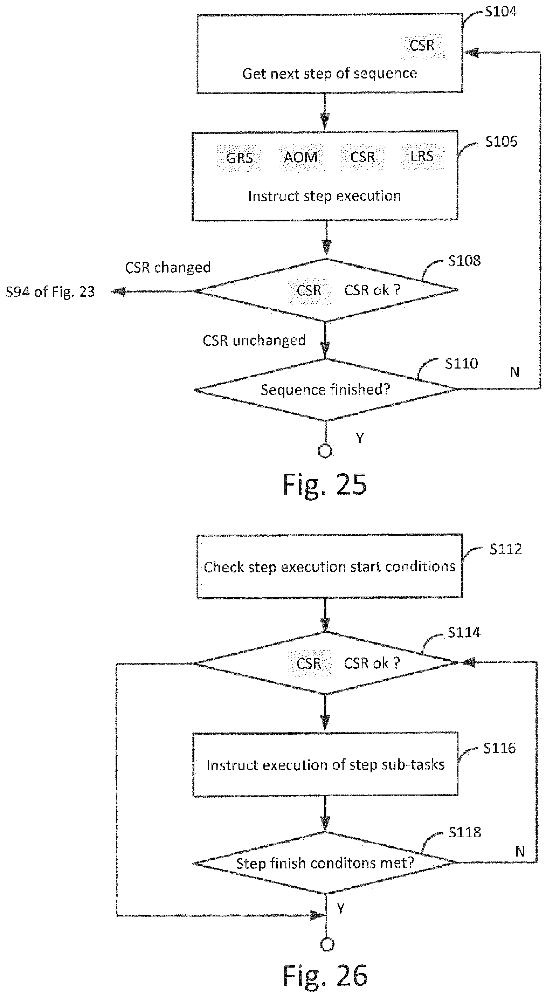

Fig. 24 shows a flowchart of operation for the sequence setup controller shown in Fig. 23. It should be noted that all steps shown in Fig. 25 are executed by the sequence setup controller 150 shown in Fig. 23

As shown in Fig. 24, a step S94 is executed to get a process sequence matching with a requested capability through access to the sequence manager 106 or to an external resource pool 114 operated externally to the resource object 26. Heretofore, there is also executed a check on the global release state GRS, the assigned operative mode AOM, the current step result CSR, and the local release status LRS to assure that an operative state within the modular processing system 10 is appropriate for start of process sequence execution.

As shown in Fig. 24, in a step S96 it is checked whether a process sequence matching with a requested capability is available. If not, there follows execution of step S98 to set the current step result section CSR of the resource object signature 30 to a sequence not found error. Otherwise, steps S100 is executed to set the current task result section CTR of the resource object signature 30 to task started followed by execution of step S102 set the current step result section CSR to valid upon successful provision of a matching process sequence.

Fig. 25 shows a flowchart of operation for the sequence controller shown in Fig. 23. It should be noted that all steps shown in Fig. 25 are executed by the sequence controller 152 shown in Fig. 23.

As shown in Fig. 25, the sequence controller 152 is adapted to iterate step execution for a process sequence through execution of an iteration control sequence according to get next step of a process sequence matching with a requested capability S104, instruct execution of the next step S106, and evaluate an execution result for the next step 108, S110.

As shown in Fig. 25, the step 104 to get a next step of the process sequence which is executed requires the evaluation of the current step result section CSR of the resource object section 30. Also, prior to instruction of execution of the next step in step S106 it is necessary to check with the global release section GRS, the assigned operative mode section AOM, the current step result section CSR, and the local resource status section LRS of the resource object signature to validate an operative status prior to step execution.

A shown in Fig. 25, a step S108 is executed to check a current step result section CSR of the resource object signature 30 after execution of the next step to evaluate the execution result for the next step. Here, operation continues with operation of the sequence setup controller 150 to get a next process sequence matching with a change in the current step result section CSR when the current step result section CSR remains valid for continuation of process sequence execution but has changed.

As shown in Fig. 25, otherwise when the current step result section CSR has not changed after execution of the next step there is execute a step S110 to check termination of the control sequence iteration.

Fig. 26 shows a flowchart of operation for the step controller 154 shown in Fig. 23. It should be noted that all steps shown in Fig. 26 are executed by the step controller 154 shown in Fig. 23

As shown in Fig. 26, the step controller 154 controls step execution with respect to a process sequence matching with a requested capability. This is achieved by a sequence of control steps according to check at least one step execution start condition in step S112, check of a current step result section CSR of the resource object signature 30 in step S114, instruction of step execution in step S116, and checking of at least one step finish condition in step S118.

Generally, and as explained with respect to Fig. 19, every step has assigned thereto a step task list listing at least one sub-task 140 to be processed for execution of the step. Here, the at least one task specification specifies a requested capability specification and/or a requested resource specification and optionally a set of parameters. Then in step S122 there is executed a check whether the at least one step execution start condition of a step is fulfilled as condition for release of task execution for the at least one sub-task 140 listed in step task list.

In more detail, prior to release of a task execution for the at least one sub-task 140 listed in the step task list it is checked in step S112 whether the global release status section GRS of the resource object signature 30 is matching with a requested global release status, whether the local release status section is section LRS of the resource object signature 30 is matching with a requested local release status, and whether the functional safety status section SAF of the resource object signature 30 is matching with a requested functional safety status. As outlined above with respect to Fig. 22, resource object sections GRS, LSR, and SAF are specified on a sequence level and to be re-examined upon execution of every step of a process sequence.

Further, prior to release of a task execution for the at least one sub-task 140 listed in the step task list it is checked in step S112 whether the step start condition section SCO of the resource object signature 30 is matching with conditions requested for start of step execution which are specified on a step level and thus step specific.

As shown in Fig. 26, step execution S114 is stopped when a current step result section CSR of the resource object signature 30 is set to invalid after the check of the at least one step execution start condition in step S112.

Otherwise, the execution of the step sub-tasks 140 is instructed in step S116 followed by a check whether the step finish condition status section FCO is matching with conditions specified for termination of step execution. If so, step execution terminates successfully. Otherwise, the processing of step related sub-tasks continues with step S114.

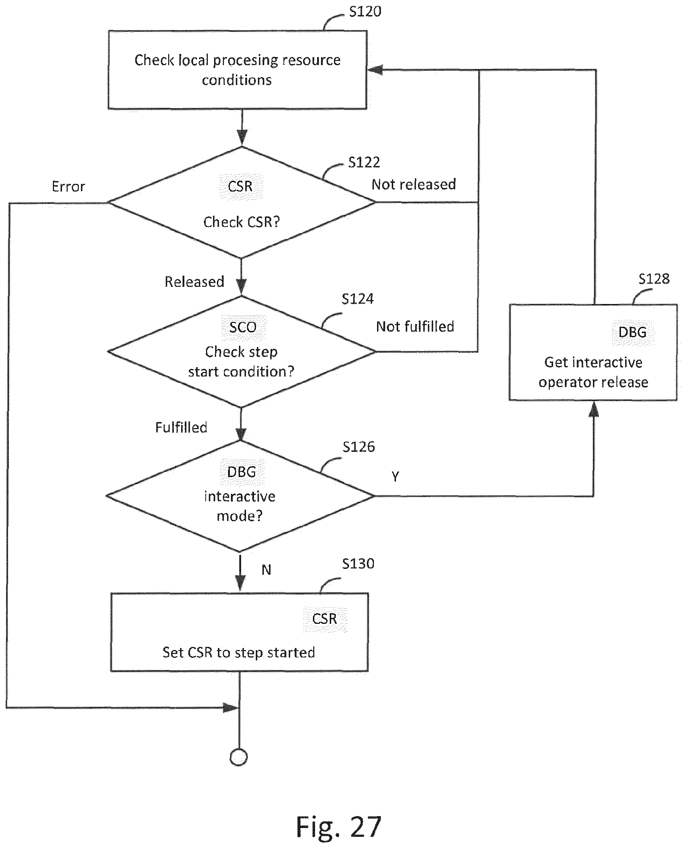

Fig. 27 shows a further detailed flowchart of operation for checking of step execution start conditions by the step controller shown in Fig. 23. It should be noted that all steps shown in Fig. 27 are executed by the step controller 154 shown in Fig. 23.

As shown in Fig. 27, in a step S120 there checked an operative status of local processing resources of the resource object 26 which are executing of the step.

Here, when the current step result section CSR of the resource object signature 30 indicates that not all local processing resources involved in the execution of the step are available the processing of the step ends in an error case.

Further, when the current step result section CSR of the resource object signature 30 indicates that step execution is not released the step S120 of checking of the operative status of local processing resources will be iterated.

Still further, when the current step result section CSR indicates that step execution is released the process continues with a step S124 to check the step start condition status section SCO of the resource object signature 30.

As shown in Fig. 27, if the result of step S124 is that step start conditions are not fulfilled then the step S120 of checking of the operative status of local processing resources will be iterated. Otherwise, there follows a step S126 to examine an interactive processing mode section DBG of the resource object signature 30 with respect to execution of a process sequence step in an interactive mode. If so, there follows a step S128 to get an interactive processing mode release in an interactive mode followed by an iteration of step S120 to check condition of local processing resources.

As shown in Fig. 27, when all step execution start conditions are met there is executed a step S130 to set the current step result section of the resource object signature 30 to step started.

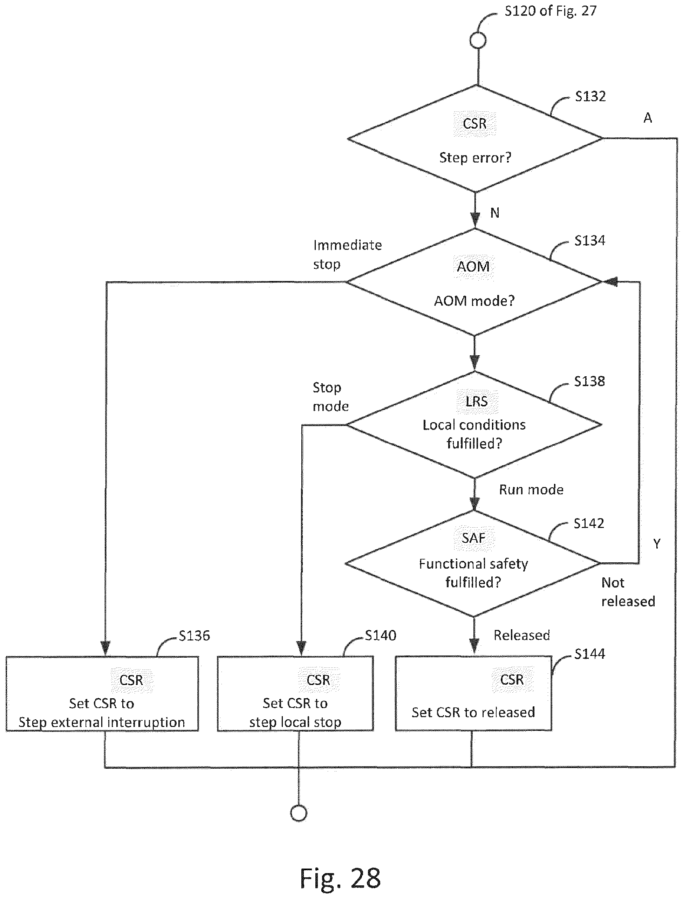

Fig. 28 shows flowchart of operation with respect to a checking of at least one local processing resource condition according to step S120 shown in Fig. 27. It should be noted that all steps shown in Fig. 28 are executed by the step controller 154 shown in Fig. 23.

As shown in Fig. 28, in step S132 it is checked that there is no step error through access the current step result section CSR of the resource object signature 30. If so, the checking of at least one local processing resource condition stops with an error.

As shown in Fig. 28, if there is no step error it is then checked in step S134 that an assigned operative mode AOM does not require an immediate stop of a process sequence step through access to the assigned operative mode AOM of the resource object signature 30. If so, there is executed a step S136 to set the current step result section CSR of the resource object signature 30 to step external interruption.

As shown in Fig. 28, when there is no step external interruption it is then checked in step S138 that the state section LSR of the resource object signature 30 is valid. If not, there is executed a step S140 to set the current step result section CSR of the resource object signature 30 to step local stop.

As shown in Fig. 28, when there is no step local stop a run mode is entered. Then, there is executed a step S142 to check whether requirements on functional safety are fulfilled through access to a functional safety section SAF of the resource object signature 30. If there is no release the procedure branches to step S134 to check whether an immediate stop mode prevails. Otherwise, there is executed a step S144 to set the current step result section CSR of the resource object signature 30 to step execution released to indicate a successful check the at least one local processing resource condition.

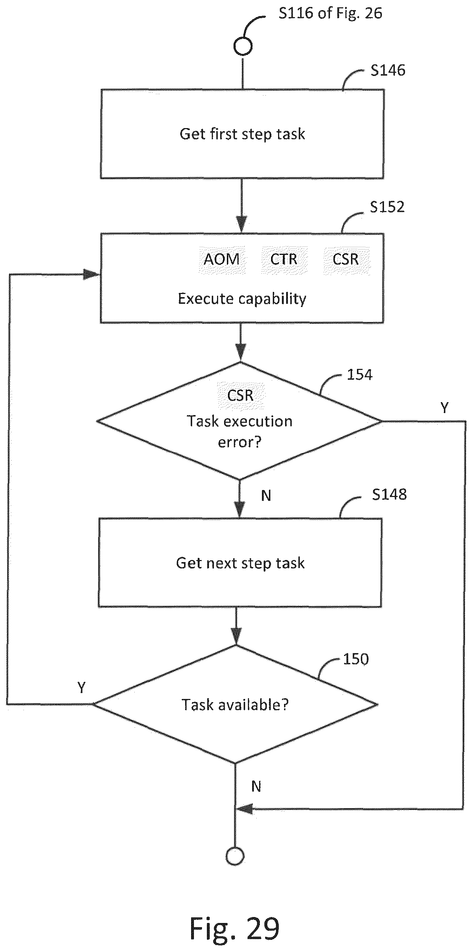

Fig. 29 shows a flowchart of operation with respect to a task execution according to step S116 shown in Fig. 26. It should be noted that all steps shown in Fig. 29 are executed by the step executer 156 shown in Fig. 23.

As shown in Fig. 29, the execution of a process sequence steps requires a task execution with respect to all tasks 140 listed in the task list. Initially there identified a first step task in a step S144. During further task execution there is identified a next step task in step S148. Then there executed a step 5150 to check whether a next step is available. If so, the execution of step task continues and otherwise the execution of step task terminates.

As shown in Fig. 29, after identification of a first step task or a next step task there is executed a step S152 to submit the first step task or the next step task to the task processor 42 for execution through a related local capability/function. It should be noted that according to the present invention during execution of step tasks 140 there are neither imposed start conditions nor finish conditions in relation to the execution thereof which avoids sequential monitoring during execution of different tasks.

As shown in Fig. 29, in step S152 there is also executed a check whether the assigned operative mode section AOM of the resource object signature 30 matches with a requested assigned operative mode, whether the current task result section CTR of the resource object signature 30 indicates a task start, and whether the current step result section CSR of the resource object signature 30 indicates a step execution release.

As shown in Fig. 29, in a step S154 it is checked whether the current step result section CSR of the resource object signature 30 indicates a task execution error after execution of every step task 140. If so, the execution of step tasks terminates and otherwise the step task execution proceeds to identification of the next step task in step S148.

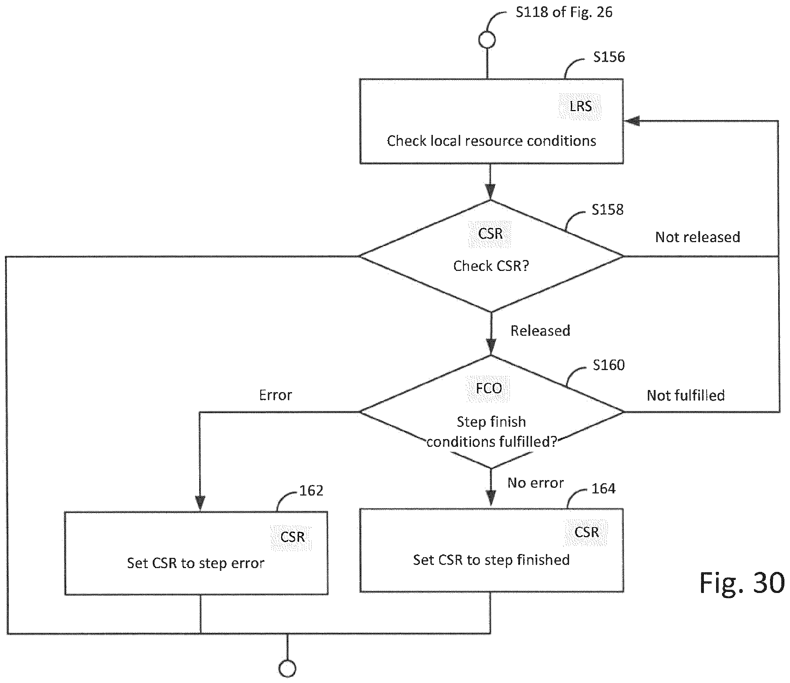

Fig. 30 shows a flowchart of operation with respect to examination of step finish conditions SCO according to step S118 shown in Fig. 26. It should be noted that all steps shown in Fig. 30 are executed by the step controller 156 shown in Fig. 23.

As shown in Fig. 30, to evaluate success of step execution there is executed a step 156 of checking whether the at least one local processing resource condition is fulfilled through access to the local release state section LSR of the resource object signature 30, a step S158 of checking S158 whether the current step result section CSR of the resource object signature 30 is set to released, and a step S160 of checking whether the at least one step related finish condition FCO is fulfilled.

As shown in Fig. 30, the step S156 of checking whether the at least one local processing resource condition is fulfilled is iterated when the current step result section CSR of the resource object signature 30 is not set to released or the step related finish condition FCO is not fulfilled.

As shown in Fig. 30, there is executed a step S162 to set the current step result section CSR of the resource object signature 30 to step error when at least one step related finish condition FCO is set to error. Otherwise, there is executed a step S164 to set the current step result section CSR of the resource object signature 30 to step finished when the step related finish condition FCO is fulfilled.

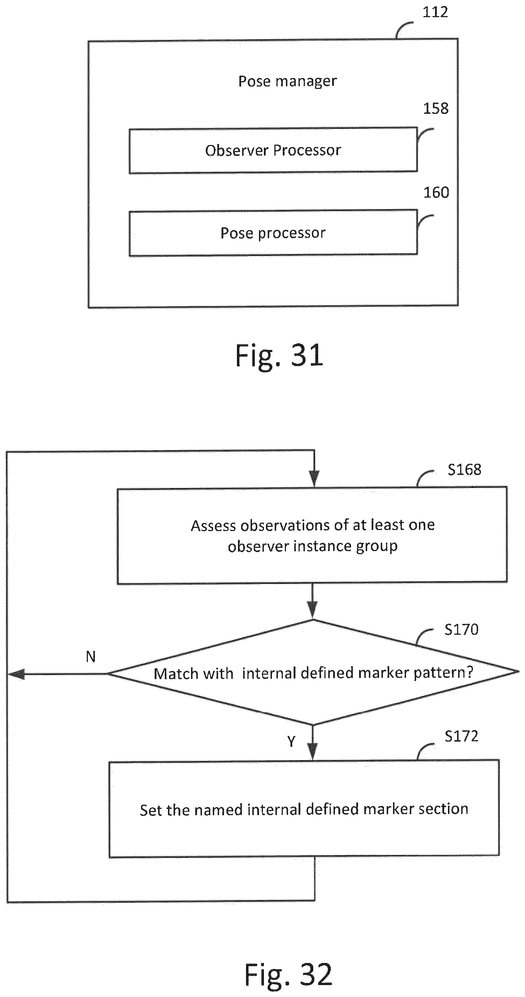

Fig. 31 shows a further detailed schematic diagram of the pose manager 112 shown in Fig. 13.

Generally, the pose manager 112 is adapted to set a named internal defined marker section IDM of the resource object signature 30 when an observer instance group 82 observes a predetermined pattern of observer sizes 34.

As shown in Fig. 31, the pose manager comprises an observer processor 158 and a pose processor 160.

Operatively, the observer processor 158 is adapted to assess observations of the observer instance group 82.

Operatively, the pose processor 160 is adapted to check a match of assessed observations in relation to at least one named internal defined marker section IDM and to set the named internal defined marker section IDM when a related internal defined marker pattern is observed.

Fig. 32 shows a flowchart of operation for the pose manager 112 sown in Fig. 30.

As shown in Fig. 32, in a step S168, operatively being executed by the observer processor 158, observations of the observer instance group 82 are assessed.

As shown in Fig. 32, in a step S170, operatively being executed by the pose processor 160, it is checked whether there is a match of assessed observations in relation to at least one named internal defined marker section IDM. Here a match implies that an observation result provided by the observer instance group 82 matches with a pre-determined pattern or required observations or observation assessment results. If there is no match, operation branches back to step S168 to continue with assessment of observations.

As shown in Fig. 32, otherwise in a step S172, operatively being executed by the pose processor 160, the named internal defined marker IDM is set and operation branches back to step S168 to continue with assessment of observations.

Here, at any time a plurality of named internal defined markers IDM may be set. Then, all defined named internal defined markers IDM form a one-dimensional vector which forms the internal defined marker section IDM of the resource object signature 30.

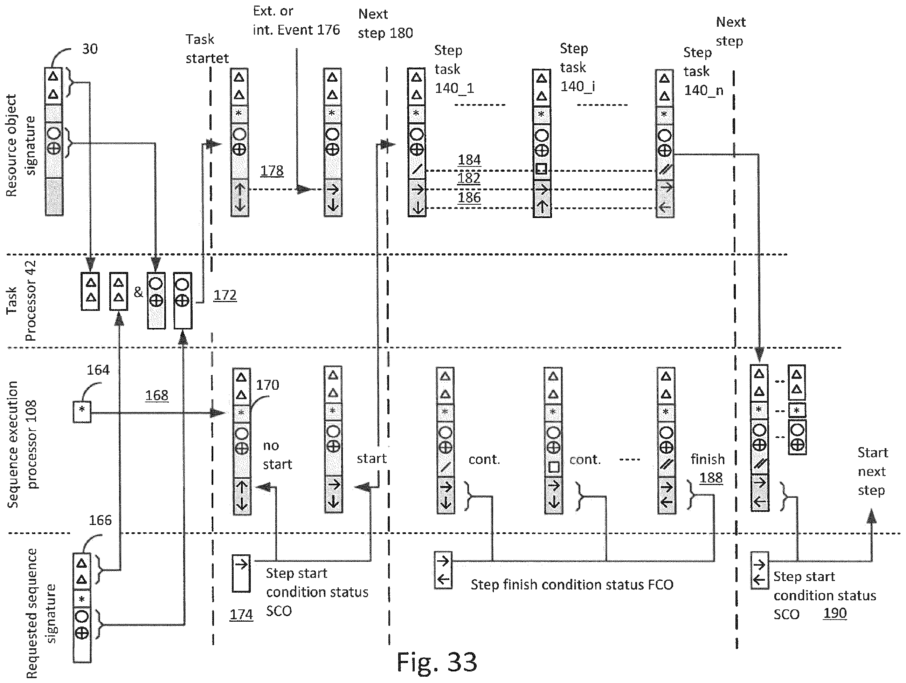

Fig. 33 shows an example of how a resource object signature 30 drives process sequence execution, e.g., for deciding on acceptance of sequence execution, on the start of sequence execution, and on the processing of process sequence steps and related step tasks.

As shown in Fig. 33, execution of a process sequence requires that global and local processing conditions are verified. On the one hand there is the resource object signature 30 which continuously changes during operation of the modular processing system 10. On the other hand, there is a requested functional safety status 164 and a requested process sequence signature 166.

As shown in Fig. 33, prior to start of process sequence execution there must be a match 168 between an actual functional safety status 170 and the required functional safety status 164. When both are set to * operation proceeds. For the example shown in Fig. 33 such constellation is assumed to be always valid in the following.

As shown in Fig. 33, prior to start of process sequence execution there must be a match 172 between resource object signature 30 and the requested process sequence signature 166. This means that the resource object signature 30 must show the patterns ΔΔ and ○⊕ as specified by the requested process sequence signature 168. As this is the case the process sequence execution in relation to a task starts.

As shown in Fig. 33, the start of a process sequence step does not necessarily mean that an execution of related steps task 140 starts as well. The reason for this is, prior to start of the next step a related step start condition status section SCO of the resource object signature 30 must be checked 174. Here, initially ↑ up arrow does not match with → and execution step tasks 140 is delayed.

However, the step start condition status section SCO of the resource object signature 30 may change, e.g., through an external event occurring outside the resource object 26 or through an internal event occurring internally in the resource object 26, see 176. Then, ↑ may change to → 178 and execution step tasks starts 180.

As shown in Fig. 33, a repeated check 182 of a step start condition status section SCO 182 indicates a fit between the requested step start condition status → and a related entry → in the step start condition status section SCO the resource object signature 30 and execution of step tasks continues. However, such execution of step tasks may lead a change 184 of other sections in the resource object signature from / to □ to //.

As shown in Fig. 33 during execution of a processing sequence step the comparison 172 between the requested sequence signature 166 and the resource object signature 30 is not repeated. This means that step tasks are executed unconditionally and only subject to re-evaluation of the start conditions of the process sequence step. This concept is used in support of independent execution of all step tasks.

As shown in Fig. 33, during execution of the different step tasks 140 also entries of the step finish condition status section FCO change 186, e.g., from ↓ to ↑ to ←. Then, finally entries of the step finish condition status section FCO may match with a requested step finish condition status → ← so that the processing of the process sequence step terminates 188.

As shown in Fig. 33, the status of the resource object signature 30 upon termination of a process sequence step forms the basis for execution of a next step of the process sequence. Here, again the sections of the resource object signature 30 specifying the functional safety status SAF, and requested process sequence execution conditions will be evaluated prior to consideration of a step start condition status SCO specified for the next step to assure operational safety 190.

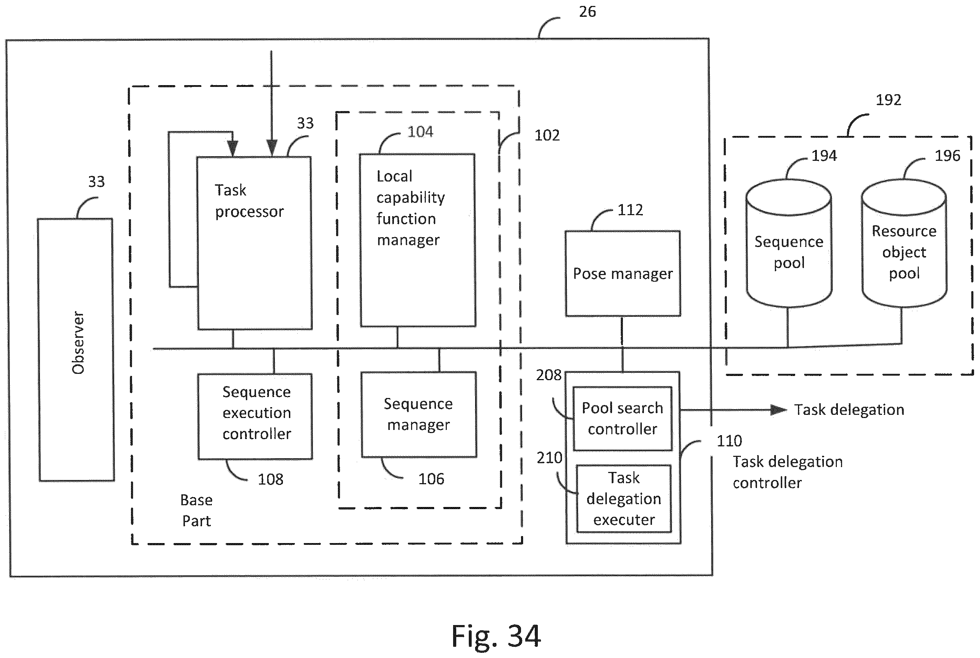

Fig. 34 shows an interoperation of the resource object shown in Fig. 13 with a processing resource pool 192 providing a pooled process sequence and/or a pooled processing resource object 196 as task delegation target upon submission of a related search request thereto.

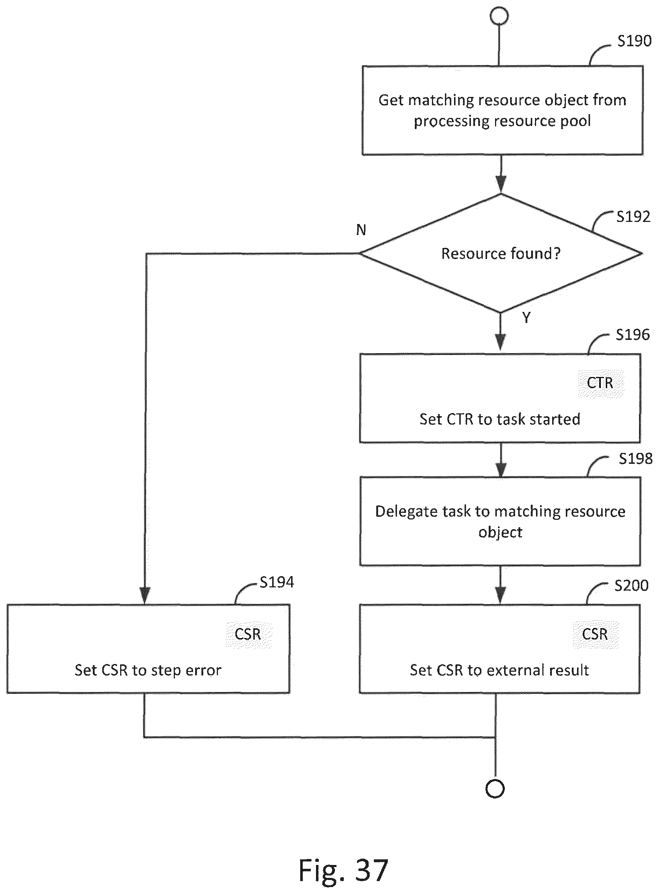

As shown in Fig. 34, the task delegation processor 110 shown in Fig. 13 comprises a pool search controller 208 and a task delegation executer 210. Details of operation with respect to these functional units will be explained in the following with respect to Fig. 37.

As shown in Fig. 34, the processing resource pool 192 is operated outside the resource object 26 and independently therefrom. It allows to extend the reservoir on available process sequences and to provide a pool of resource objects to which a task execution may be delegated. Therefore, the use of a processing resource pool 192 forms the basis for increase in flexibility during operation of the resource object 26.

Here, the interoperation between the processing sequence pool 194 and the local processing resource 26 is related to release of process sequence execution and/or to release of task delegation.

For release of process sequence execution, the task processor 42 may either access the sequence pool 194 directly or indirectly via the sequence manager 106 prior to release of the process sequence execution.

Also, new process sequences from the sequence pool 194 may be uploaded to the sequence manager 106 upon availability thereof irrespective of any ongoing release of a process sequence execution. This allows for a continuous update a reservoir of available process sequences in the sequence manager 106.

For release of task delegation, the task processor 42 may access the task processor 42. In more detail, the task processor 42 will directly access the resource object pool 196 to find out which further resource object 26 outside the operating resource object 26 is prepared to take over handling of a task execution process.

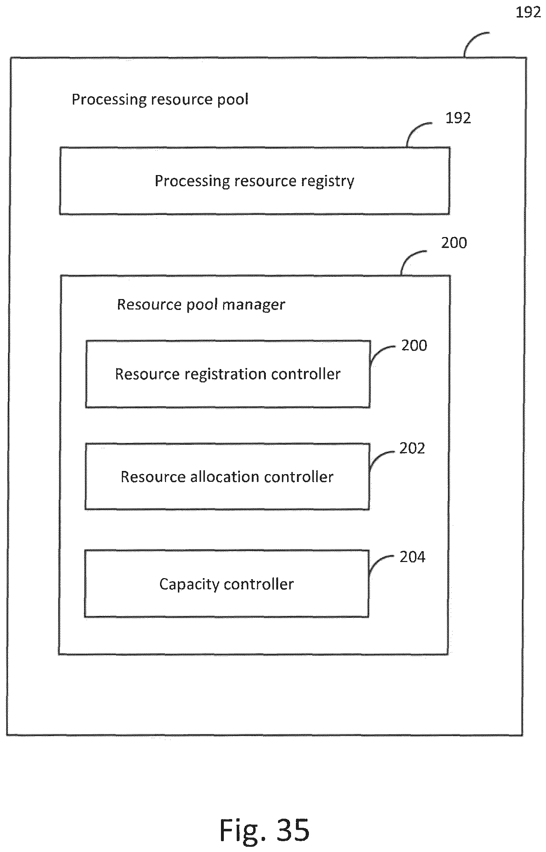

Fig. 35 shows a schematic diagram of the processing resource pool shown in Fig. 34.

Generally, the processing resource pool 192 is operated in relation to a resource object 26 for providing access to at least one processing resource which may be used by the resource object for task execution during operation of a modular processing system 10. Such processing resource may either be a process sequence or a further resource object to a task execution may be delegated.

As shown in Fig. 35, the processing resource pool 192 comprises a processing resource registry 198 and a resource pool manager 200. The resource pool manager 200 comprises a resource registration controller 202, a resource allocation controller 204, and a capacity controller 206.

Operatively, the processing resource registry 198 is adapted to register at least one processing resource according to at least one registration criteria characterizing the at least one processing resource.

Further, operatively the resource registration controller 202 of the resource pool manager 200 is adapted to control registration and de-registration of processing resources at the processing resource registry 198. This may by done in a static manner per subscribe or in a dynamic manner with per process sequence step execution.

Further, operatively the resource allocation controller 204 of the resource pool manager 200 is adapted to pool a plurality of search requests and to handle reservation of processing resources, to execute a criterium-based search, to apply optimization of selection during search through application of a selection cost function, to execute a pre-reservation of a processing resource, and/or to release a processing resource after use thereof.

Further, operatively, the capacity controller 206 of the resource pool manager 200 is adapted to control an allocation of a registered processing resource to a resource object 26 submitting a search request. Generally, capacity management implies administration of the availability of processing resources. There may be used capacity groups which upon allocation of one processing resource of the group automatically allocate the remaining processing resources in the group.

It should be noted that the capacity controller 206 is adapted to virtual capacity management for support of pre-reservation of process resources over certain periods in time. Another field of application is a simulation of processing resource allocations or to pool processing resource allocations for optimization thereof.

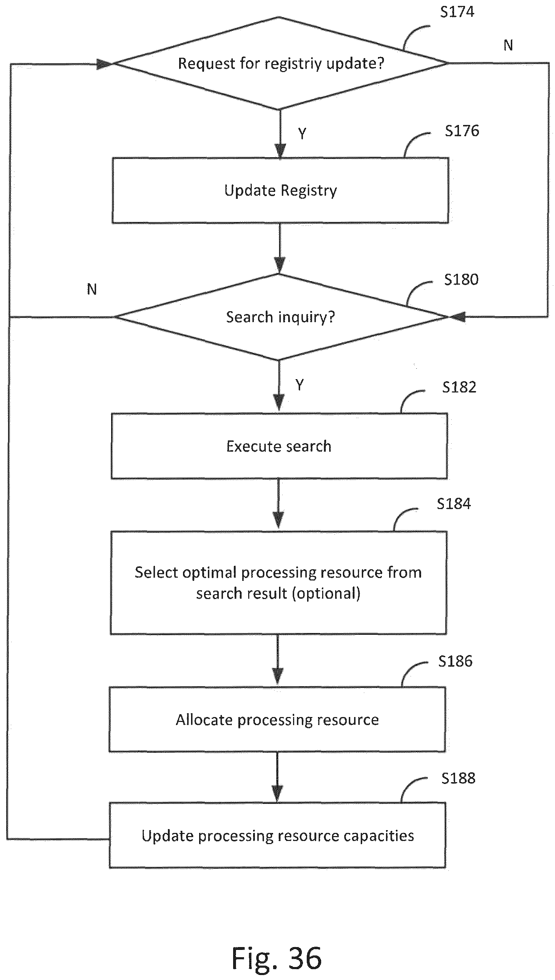

Fig. 36 shows a flowchart of operation for the resource processing pool shown in Fig. 35.

As shown in Fig. 36, during operation of the processing resource pool 192 there is a continuous toggling between a registration process and a search process.

As shown in Fig. 36, in a step S174, operatively being executed by the resource registration controller 202, there is executed an inquiry whether the processing resource registry 198 is to be updated. If so, then in a step S176, operatively being executed by the resource registration controller 202, the processing resource registry 198 is updated accordingly.

Here, according to a first option of registration at least one processing sequence may be registered in the sequence pool 194 of the processing resource pool 192. The processing sequence is registered in combination with at least one criterium characterizing the at least one processing sequence, e.g., a pre-determined capability specification provided upon execution of at least one process sequence. Typically, the registered at least one registered process sequence implements part of a process plan set up for the modular processing system. However, it may also be a process sequence that can be executed independently from a process plan.

Further, according to a second option of registration at least one resource object in the resource object pool 196 is adapted to register at least one resource object 26 as registered processing resource in the resource object pool 196. The at least one resource object 26 is registered in combination with at least one criterium characterizing the at least one resource object, e.g., at least be a capability specification and/or predetermined resource specification of the at least one resource object thereof, or whether the at least one registered resource object accepts a task delegation.

Further, another criterium might be a functional assignment characterizing a plurality of resource objects having an identical predetermined capability specification and achieving different technical effects during operation thereof.

Further, a registration of a processing resource may be executed in a static manner through use of a subscription mechanism or in a dynamic manner to register and deregister processing resources in the processing resource registry 198 to reflect over time availability of processing resources according to an operative status of the modular processing system 10.

Further, it is possible to register processing resources in association with a an operative constraint that must prevail in the modular processing system 10 prior to use of the at least one registered processing resource for task execution.

As shown in Fig. 36, when the registry update is not required, then there is executed a step S180, operatively being executed by the resource allocation controller 204, to check whether the processing resource registry 198 is to be searched.

If so, then the procedure proceeds to a step S182, operatively being executed by the resource allocation controller 204 to search the processing resource registry 198. Otherwise, the procedure will branch back to step S174 to check whether the processing resource registry must be updated.

As shown in Fig. 36, in a step S184, operatively being executed by the resource allocation controller 204, there is executed an optimization of a processing resource allocation on a basis of a search result achieved in step S182.

Here, optimization may relate to process resource specific criteria like execution time for use of a processing resource, operative cost for use of a processing resource, further, related availability, reliability, and/or configurability, selection in consideration of a plurality of search requests, to develop a global picture, etc.

Further, according to the present invention it is possible to pool a plurality of search requests prior to search of the processing resource registry 198. Also, a registered processing resource may be reserved prior to an allocation thereof.

As shown in Fig. 36, in a step S186, operatively being executed by the resource allocation controller 206, at least one processing resource from the optimized processing resource allocation is allocated and related entries in the processing resource registry 198 are marked accordingly.

As shown in Fig. 36, in a step S188, operatively being executed by the capacity controller 206, there is executed an update of the availably of processing resources and related processing capacities.

Further, the capacity controller 206 is adapted to manage a virtual allocation of processing resources registered in the processing resource registry 198 in support of processing resource reservation, a process resource allocation simulation, and/or of a processing resource pooling during optimization or processing resource allocation.

Fig. 37 shows a flowchart of operation for the task delegation controller 110 shown in Fig. 34.

Generally, for a delegation of a task from a source resource object 26 to a target resource object 26 the target resource object 26 is available from the resource object pool 194 of the processing resource pool.

As shown in Fig. 34 above, for processing of the delegation of a task the task delegation controller 110 shown in Fig. 13 comprises a pool search controller 208 and a task delegation executer 210.

Operatively, the pool sequence controller 208 is adapted to execute the following steps:
As shown in Fig. 37, in a step S190 there is submitted a search request for a pooled resource object to the resource object pool 194 to get a pooled resource object matching with the search request in response thereto. Here, the search request comprises the requested resource specification and optionally a requested resource capability.

As shown in Fig 37, in a step S192 it is then check whether a pooled resource object is available for task delegation. If not, in a step S194 the current step result section CSR of the resource object signature 30 is set to step error when no pooled resource object having resource specification matching with requested resource specification is available.

Operatively, the task delegation executer 210 is adapted to execute the following steps:
As shown in Fig. 37, in a step S196 the current task result section CTR of the resource object signature 30 is set to task started when a pooled process resource matching with the search request is searchable.

As shown in Fig. 37, in a step S198 the processing of the task is delegated to the matching resource object searched for task delegation, and in a step 5200 the current step result section CSR of the delegating resource object is set to external result. Here, it is an option to evaluate resource occupation for the resource object at the time of task delegation to assure operability thereof.

It should be noted that according to the present invention the task delegation as explained above should always be executed at a point in time which occurs as late as possible. This assures, that the operating status is considered at the actual time of task delegation and not at a point in time having no relation to the task delegation process.

Also, while resource objects might be blocked a point in time before a task delegation is considered, nevertheless at a time of task delegation a related blocking condition may no longer prevail so that a previously blocked resource object become available for task delegation again. This a task delegation as late as possible increases the pool of resource objects which are available for task delegation.

Another question is, how a capability of a resource object being searched for task delegation can be addressed directly. Heretofore, according to the present invention it is possible to use a wild card for capabilities or to specify a task delegation under a condition or a set of conditions.

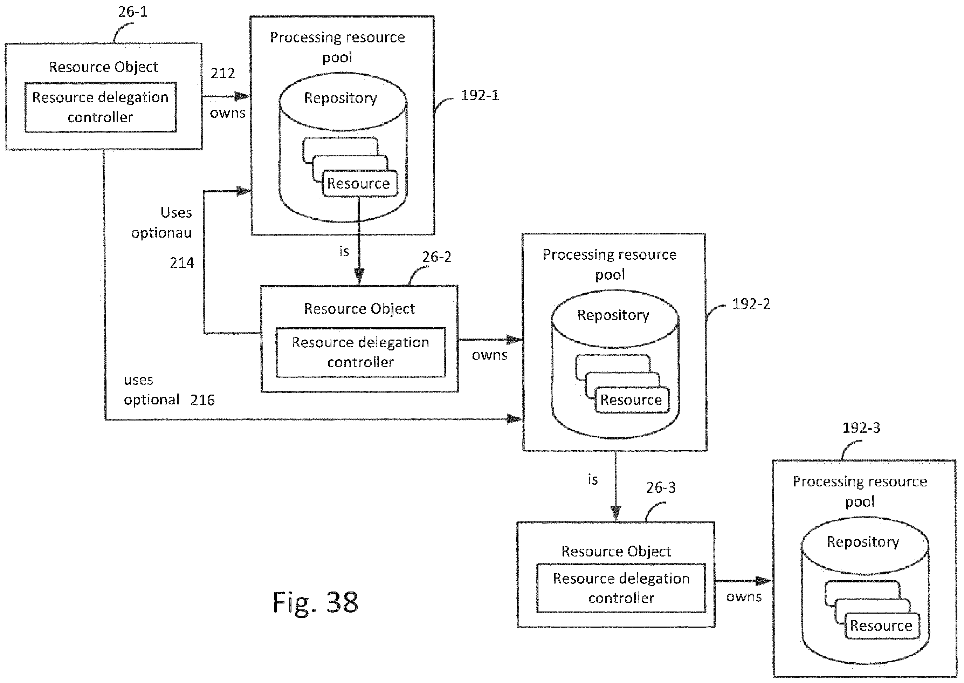

Fig. 38 shows options for interoperation between resource objects and related resource objects pools.

As shown in Fig. 38, interoperation between resource objects 26 and related resource object pools 192 has no hierarchy imposed thereon.

As shown in Fig. 38, a first option for interoperation is that a resource object 23-1 executes access 212 to its own processing resource pool 192-1.

As shown in Fig. 38, a second option for interoperation is that a resource object 23-2 executes access 214 to a processing resource pool 192-1 where it is registered.

As shown in Fig. 38, a third option for interoperation is that a resource object 23-1 executes access 216 to a processing resource pool 192-2 of resource objects 23-2 being registered it is own process resource pool 192-1.

As shown in Fig. 38, there is no further referencing between resource objects 23 and processing resource pools 192 for reasons of practicability. E.g., resource object 23-1 may not access process resource pool 192-3 and resource object 23-3 may neither access resource object 23-1 or the processing resource poll 192-1.

While the present invention has been described with reference to the drawing it should be noted that clearly the present invention may also be implemented using variations and modifications thereof which will be apparent and can be readily made by those skilled in the art without departing from the scope and spirit of the present invention. E.g., functionalities described above may be realized in software, in hardware, or a combination thereof.

Accordingly, it is not intended that the scope of claims appended hereto is limited to the description as set forth herein but rather that the claims should be construed so as to encompass all features of presentable novelty that preside in the present invention, including all features that would be treated as equivalent thereof by those skilled in the art to which the present invention pertains.

## Claims

1. Method of operating a resource object (26) in a modular processing system (10) for execution of at least one task (28) in support of modular processing system operation, wherein every task (28) is defined by a requested capability specification representing an expected functionality for task execution and/or by a requested resource specification representing at least one processing resource expected for task execution and wherein a resource object signature (30) represents over time an operative status prevailing in the modular processing system (10) outside the resource object (26) and/or locally at the resource object(26) , the method comprising:
a step (S20) of checking whether at least one selected processing resource usable by the resource object (26) has a capability specification matching with the requested capability specification of the task and/or a resource specification matching with the requested resource specification of the task;
a step (S18) of checking whether at least one operative status (GRS, LRS) that is represented by the resource object signature (30) matches with a requested operative status that must prevail as a condition for release of task execution through the resource object (26);
a step (S22) of releasing a task execution with respect to a task under consideration upon availability of at least one selected processing resource with matching capability specification and/or resource specification and upon a match with the requested operative status; and
a step (S24) of controlling task execution by the selected at least one processing resource in observation of the resource object signature (30).

2. Method according to claim 1, wherein the modular processing system (10) is a production system, the method being executed for control of the production system and with respect to at least one task (28) from a process plan which is specified for the production system.

3. Method according to any of the claims 1 to 2, comprising a step (S14) of tracking (S14) of an operative status which prevails in the modular processing system (10) by observing at least one observation size (34) that is observable in the modular processing system (10).

4. Method according to any of the claims 1 to 3, wherein the step (S24) of controlling task execution is executed with respect to an external task submitted to the resource object (26) from outside or with respect to an internal task generated internally in the resource object (26) during a task execution or due to a change in the resource object signature (30).

5. Method according to any of the claims 1 to 4, wherein the resource object signature (30) comprises a global release section (GRS) representing a global status that prevails outside the resource object (26) and comprising a step (S18) of checking prior to release of a task execution whether the global release section is matching with requested operative status specified for the resource object (26).

6. Method according to any of the claims 1 to 5, wherein the resource object signature (30) comprises a current task result section (CTR) representing a result of task execution or a task idle state of the resource object and the method comprises a step (S28) to set the current task result section (CTR) to task idle upon successful task execution.

7. Method according to any of the claims 1 to 6, wherein the resource object signature (30) comprises a local release section (LRS) representing a local status that prevails inside the resource object (26) and must match with a requested local status specified for the resource object (26) as a condition for release of task execution and wherein the method comprises a step (S38) of checking check (S38) prior to release of a task execution whether the local release status (LRS) is matching with the predetermined requested local release status specified for the task execution.

8. Method according to any of the claims 1 to 7, wherein the resource object signature comprises a safety section (SAF) representing at least one safety relevant condition for release of task execution and the method comprises a step of checking prior to release of task execution whether an observed operation mode is matching with the assigned safety section (SAF).

9. Method according to any of the claims 1 to 8, wherein the step (S24) of controlling task execution selects at least one processing resource for task execution from a plurality of processing resources with matching capability specification and/or matching resource specification at a time of task execution start.

10. Method according to any of the claims 1 to 9, wherein at least one pooled resource object is available for a delegation of a task thereto through access to a processing resource pool (192, 194, 196, 198), and every pooled resource object has assigned thereto at a resource specification, and wherein a task delegation is controlled by:
execution of a step (S190) to submit a search request for a pooled resource object to the processing resource pool (192) and to get a pooled resource object matching with the search request in response thereto; and
execution of a step (s198) to delegate task execution to the search resource object in observation of the resource object signature (30).

11. Resource object (26) operated in a modular processing system (10) for execution of at least one task (28) in support of modular processing system operation, wherein every task (28) is defined by a requested capability specification representing an expected functionality for task execution and/or by a requested resource specification representing at least one processing resource expected for task execution and wherein the resource object (26) continuously references a resource object signature (30) representing over time an operative status prevailing in the modular processing system (10) outside the resource object (26) and/or locally at the resource object(26) , the resource object comprising:
a task pre-processor (98) adapted to release a task execution with respect to a task under consideration when
at least one selected processing resource usable by the resource object (26) has a capability specification matching with the requested capability specification of the task and/or a resource specification matching with the requested resource specification of the task; and
at least one operative status (GRS, LRS) that is represented by the resource object signature (30) matches with a requested operative status that must prevail as a condition for release of task execution through the resource object (26);
a task execution controller (100) adapted to control task execution by the selected at least one processing resource in observation of the resource object signature (30).

12. Processing resource pool (192) operated in relation to a resource object (26) according to claim 11 for providing access to at least one processing resource which may be used by the resource object for task execution during operation of a modular processing system (10), the processing capacity pool comprising:
a processing resource registry (198) adapted to register (S176) at least one processing resource according to at least one registration criteria characterizing the at least one processing resource; and
a resource pool manager (200) including a resource allocation controller (204) adapted to
search (5182) the processing resource registry (198) upon receipt of a search request specifying at least one search criteria to check whether at least one registration criteria of at least one registered processing resource registered in the processing resource registry (198) matches with the at least one search criteria for generation of a search result;
optimize (S184) the search result through application of a search optimization function when the search result lists a plurality of registered processing resources, wherein the search optimization function evaluates at least one search relevant feature of registered processing resources listed in the search result for identification of at least one preferred registered processing resource from the search result and for related update of the search result; and to
allocate (S186) every registered processing resource listed in the search result to an allocation resource object for subsequent use through the allocation resource object.

13. Processing resource pool according to claim 12, wherein the resource pool manager comprises a capacity controller (206) adapted to manage a virtual allocation of processing resources registered in the processing resource registry in support of processing resource reservation, a process resource allocation simulation, and/or of a processing resource pooling during optimization or processing resource allocation.

14. Method of operating a processing resource pool (192) operated in relation to a resource object (26) according to claim 11 for providing access to at least one processing resource which may be used by the resource object for task execution during operation of a modular processing system (10), the method comprising:
a step of registering (S176) at least one processing resource according to at least one registration criteria characterizing the at least one processing resource;
a step (S182) of searching the processing resource registry (198) upon receipt of a search request specifying at least one search criteria to check whether at least one registration criteria of at least one registered processing resource registered in the processing resource registry (198) matches with the at least one search criteria for generation of a search result;
a step (S184) of optimizing the search result through application of a search optimization function when the search result lists a plurality of registered processing resources, wherein the search optimization function evaluates at least one search relevant feature of registered processing resources listed in the search result for identification of at least one preferred registered processing resource from the search result and for related update of the search result; and
a step (5186) of allocating every registered processing resource listed in the search result to an allocation resource object for subsequent use through the allocation resource object.

15. Method according to claim 14, comprising a step of managing a virtual allocation of processing resources registered in the processing resource registry in support of processing resource reservation, a process resource allocation simulation, and/or of a processing resource pooling during optimization or processing resource allocation.
